# EUROPEAN PATENT APPLICATION

(11) **EP 4 614 854 A1**
(43) Date of publication of application: **10.09.2025**
(21) Application number: 23884590.3
(22) Date of filing: 16.10.2023
(51) Int. Cl.: H04L 5/00, H04W 4/02

(54) **COMMUNICATION METHOD AND COMMUNICATION APPARATUS**

(30) Priority: 04.11.2022 CN 202211379333
(71) Applicant: Huawei Technologies Co., Ltd., Shenzhen, Guangdong 518129 (CN)
(72) Inventor: LIU, Mengting, Shenzhen, Guangdong 518129 (CN); DAI, Xizeng, Shenzhen, Guangdong 518129 (CN); GAO, Xin, Shenzhen, Guangdong 518129 (CN); SHANG, Shunshun, Shenzhen, Guangdong 518129 (CN)
(74) Representative: Epping - Hermann - Fischer
(86) International application number: PCT/CN2023/124803
(87) International publication number: WO 2024/093658

(57) **Abstract**

A communication method and a communication apparatus are provided. The communication method includes: A terminal device receives at least two first signals obtained by at least two nodes through reflection, where the at least two first signals are mutually orthogonal. The terminal device measures the at least two first signals based on configuration information for the at least two nodes. The at least two first signals obtained by the at least two nodes through reflection may be received by the terminal device. Configuration information for signal processing is configured for each node, so that the terminal device distinguishes, from the at least two received first signals, a signal obtained by each node through reflection.

## Description

### CROSS-REFERENCE TO RELATED APPLICATIONS

This application claims priority to Chinese Patent Application No. 202211379333.0, filed with the China National Intellectual Property Administration on November 4, 2022 and entitled "COMMUNICATION METHOD AND COMMUNICATION APPARATUS", which is incorporated herein by reference in its entirety.

### TECHNICAL FIELD

This application relates to the field of positioning technologies, and in particular, to a communication method and a communication apparatus.

### BACKGROUND

A reflector, for example, an intelligent metasurface, may reflect, refract, or transmit an electromagnetic wave, to improve coverage of a wireless network, and may also be used for positioning, to improve positioning accuracy. Generally, the intelligent metasurface can perform only amplification, phase modulation, and the like on a received signal, but cannot change other features of the signal. In this case, for a receive end, signals from different intelligent metasurfaces obtained through reflection are essentially the same. In a possible application scenario, for example, in positioning or beam management, the receive end needs to identify signals from different intelligent metasurfaces obtained through reflection.

Currently, a transmit end sends different reference signals in different beam directions. In this case, intelligent metasurfaces in different beam directions receive different reference signals. The receive end may identify signals from different intelligent metasurfaces obtained through reflection by distinguishing between beam directions, to implement positioning. However, this method has a high requirement on the transmit end and the receive end, and has a limited application scope. In addition, the receive end cannot distinguish between reference signals sent by using a same beam, and distinguishing accuracy is limited.

### SUMMARY

This application provides a communication method and a communication apparatus, so that a receive end can distinguish between signals from different reflectors, a use range is wider, and distinguishing accuracy is higher.

According to a first aspect, a communication method is provided. The method may be performed by a first communication apparatus. The first communication apparatus may be a communication device or a communication apparatus that can support a communication device in implementing a function required by the method, for example, a chip system. For example, the communication apparatus is a terminal device, a chip system disposed in a terminal device, or another component configured to implement a function of a terminal device. For ease of description, the following describes the communication method provided in the first aspect by using an example in which the first communication apparatus is the terminal device.

The communication method includes: The terminal device receives at least two first signals obtained by at least two nodes through reflection, where the at least two first signals are mutually orthogonal. Then, the terminal device measures the at least two first signals based on configuration information for the at least two nodes.

In this embodiment of this application, the at least two nodes have a reflection, transmission, refraction, or another function. For example, the at least two nodes are provided with an intelligent metasurface, or the at least two nodes are located at different locations on a same intelligent metasurface, or the at least two nodes are intelligent metasurfaces. The at least two first signals obtained by the at least two nodes through reflection may be received by the terminal device. In this embodiment of this application, configuration information for signal processing may be separately configured for the at least two nodes. For example, the at least two nodes include a first node and a second node, a first set of configuration information is configured for the first node, and a second set of configuration information is configured for the second node. The first node processes (for example, reflects) a received signal based on the first set of configuration information, and the second node processes a received signal based on the second set of configuration information. Different configuration information makes features of first signals obtained by different nodes through reflection different. Therefore, the configuration information for the at least two nodes may enable the terminal device to distinguish, from the at least two received first signals, a signal obtained by each node through reflection. Compared with current beam-based distinguishing between signals from different nodes, this can improve distinguishing accuracy, reduce complexity of a transmit end and a receive end, and is applicable to more scenarios.

In a possible implementation, the configuration information for the at least two nodes has a plurality of implementation forms, provided that the at least two first signals obtained by the at least two nodes through reflection can be distinguished.

Implementation form 1: The configuration information for the at least two nodes includes configuration information of at least two orthogonal sequences. For example, the at least two nodes include the first node and the second node. In this case, the configuration information for the at least two nodes includes configuration information of a first sequence for the first node and configuration information of a second sequence for the second node, and the first sequence and the second sequence are mutually orthogonal. Different sequences are configured for the first node and the second node, so that the at least two first signals obtained by the first node and the second node through reflection are orthogonal. The terminal device may distinguish, from the at least two received first signals based on the first sequence and the second sequence, a first signal from the first node and a first signal from the second node.

Optionally, a granularity of the orthogonal sequence is a symbol or a slot. For example, the first sequence is a sequence including M elements. The M elements correspond to N symbols, and M and N are positive integers. The N symbols are located in one slot or a plurality of consecutive slots. When the orthogonal sequence acts in one slot, a delay can be effectively reduced. Alternatively, the M elements correspond to L slots, and L is a positive integer. In other words, the M elements act in a plurality of slots, and the granularity of the orthogonal sequence is at a slot level, so that complexity of implementing signal reflection on a node side can be reduced.

Optionally, the configuration information of the at least two orthogonal sequences includes lengths of the at least two orthogonal sequences and/or at least two pieces of index information. The at least two pieces of index information indicate an association relationship between the at least two orthogonal sequences and the at least two nodes. Any two orthogonal sequences with a same length are mutually orthogonal, and an orthogonal sequence with a fixed length is predefined. Therefore, the orthogonal sequence may be indirectly indicated by configuring the length of the orthogonal sequence. Indexes of the orthogonal sequences may indicate specific orthogonal sequences to be used, and configuration of an orthogonal sequence for each node may be implemented by using an association relationship between the indexes of the orthogonal sequences and the at least two nodes.

Implementation form 2: The configuration information for the at least two nodes includes at least two pieces of time domain configuration information. For example, the at least two nodes include the first node and the second node. In this case, the configuration information for the at least two nodes includes first time domain configuration information for the first node and second time domain configuration information for the second node. Different time domain configurations are configured for the first node and the second node, so that the at least two first signals obtained by the first node and the second node through reflection are orthogonal in time domain. For the receive end, a first signal obtained by the first node through reflection and a first signal obtained by the second node through reflection may be distinguished from the at least two received first signals based on the first time domain configuration information and the second time domain configuration information.

In a possible implementation, the first time domain configuration information indicates first duration, the second time domain configuration information indicates second duration, and the first duration is different from the second duration. The first duration indicates the first node to reflect a signal after the first duration after receiving the signal. The second duration indicates the second node to reflect a signal after the second duration after receiving the signal. Different duration is configured for different nodes, so that signals obtained by different nodes through reflection are mutually orthogonal.

The first duration may be less than or equal to one slot. In other words, a minimum unit of delay duration for signal reflection by the first node is a symbol, so that a delay is short. Alternatively, the first duration is greater than one slot. In other words, a minimum unit of delay duration for signal reflection by the first node is a slot, so that complexity of implementing signal reflection by the node is low.

In a possible implementation, the first time domain configuration information indicates a first time domain pattern, the second time domain configuration information indicates a second time domain pattern, and the first time domain pattern is different from the second time domain pattern. The first time domain pattern indicates a first time domain resource occupied by the first signal obtained by the first node through reflection. The second time domain pattern indicates a second time domain resource occupied by the first signal obtained by the second node through reflection. The first time domain resource is different from the second time domain resource. In a possible implementation, the first time domain resource is orthogonal to the second time domain resource. Optionally, different nodes may implement different time domain patterns by turning on or turning off a circuit. For example, a RIS may implement different time domain patterns by controlling an on/off state of a PIN diode connected to a RIS unit.

Implementation form 3: The configuration information for the at least two nodes includes at least two pieces of frequency domain configuration information. For example, at least two sets of configuration information include first frequency domain configuration information for the first node and second frequency domain configuration information for the second node. The first frequency domain configuration information indicates a first frequency domain resource occupied by a first signal obtained by the first node through reflection. The second frequency domain configuration information indicates a second frequency domain resource occupied by a first signal obtained by the second node through reflection. The first frequency domain resource is different from the second frequency domain resource. Optionally, the first frequency domain resource is orthogonal to the second frequency domain resource. Different nodes selectively reflect received signals in corresponding frequency domain ranges based on configured frequency domain resources. For example, a frequency domain resource occupied by a received signal is [F1, F2], a frequency domain resource occupied by a signal obtained by the first node through reflection is [F1, F3], and a frequency domain resource occupied by a signal obtained by the second node through reflection is [F4, F2], where F3<=F4. Therefore, for the receive end, the first signal obtained by the first node through reflection and the first signal obtained by the second node through reflection may be distinguished from the at least two received first signals based on the first frequency domain configuration information and the second frequency domain configuration information.

Optionally, the foregoing implementation form 1 to implementation form 3 may be combined with each other. For example, the configuration information for the at least two nodes includes configuration information of at least two orthogonal sequences and at least two pieces of time domain configuration information. For example, the at least two nodes include the first node and the second node, and the configuration information for the at least two nodes includes configuration information of a first sequence and first time domain configuration information for the first node, and configuration information of a second sequence and second time domain configuration information for the second node. Therefore, a system capacity can be improved.

In a possible implementation, the configuration information for the at least two nodes includes first information, and the first information indicates an association relationship between the configuration information for the at least two nodes and the at least two nodes. An access network device or a positioning management device may indicate a correspondence between the configuration information for the at least two nodes and the at least two nodes to the terminal device, so that the terminal device determines which set of configuration information corresponds to which node. The first information may be included in any one set of configuration information in the configuration information for the at least two nodes, or each set of configuration information may include the first information. Alternatively, the first information may be independent of the configuration information for the at least two nodes, and is sent by the access network device or the positioning management device to the terminal device.

Optionally, that the first information indicates an association relationship between the at least two sets of configuration information and the at least two nodes includes: The first information indicates an association relationship between the configuration information for the at least two nodes and configuration information for a second signal. One first signal is obtained by one node by reflecting the second signal. The second signal may be a reference signal sent by the access network device, for example, may be a positioning reference signal. For example, the second signal is reflected by the node in a form of the first signal. An association relationship between the configuration information for the at least two nodes and the positioning reference signal is configured, so that the terminal device can determine the correspondence between the configuration information for the at least two nodes and the at least two nodes without sensing existence of the nodes. In this way, leakage of node information (for example, identification information and location information) in a network can be reduced, and network security can be improved.

Optionally, that the first information indicates the association relationship between the configuration information for the at least two nodes and the at least two nodes includes: The first information indicates an association relationship between the configuration information for the at least two nodes and identification information (for example, identities (identity, ID)) of the at least two nodes.

Optionally, that the first information indicates the association relationship between the configuration information for the at least two nodes and the at least two nodes includes: The first information indicates an association relationship between the configuration information for the at least two nodes and location information of the at least two nodes. In a scenario in which the terminal device determines a location of the terminal device, for example, a UE-based positioning scenario, the first information may indicate the association relationship between the configuration information for the at least two nodes and the location information of the at least two nodes. In other words, configuration information configured for a node may be determined by using a location of the node.

A plurality of examples in the foregoing three examples of the first information may be combined. For example, the first information may indicate an association relationship between the configuration information for the at least two nodes and configuration information for a second signal, and an association relationship between the configuration information for the at least two nodes and location information of the at least two nodes.

In a possible implementation, the method further includes: The terminal device receives first indication information, where the first indication information is used to activate one or more of the at least two sets of configuration information. The at least two sets of configuration information may be configured in advance or preconfigured by the network (the access network device, the positioning management device, or another function entity) for the terminal device, and do not need to be configured in real time, so that signaling overheads are reduced, and the delay is reduced. For example, a plurality of sets of configuration information may be (pre)configured, and the access network device or the positioning management device activates one or more of the plurality of sets of configuration information by using the first indication information, to notify the terminal device of the configuration information configured by the access network device or the positioning management device for the nodes.

In a possible implementation, the method further includes: sending the configuration information for the at least two nodes to the terminal device in a form of a unicast message or a broadcast message. The configuration information for the at least two nodes may be dynamically configured by the access network device or the positioning management device for the terminal device. In this way, the terminal device may obtain latest configuration information, and an operation is more flexible.

In an example, the access network device may send the configuration information for the at least two nodes to the terminal device by using the broadcast message or the unicast message. The broadcast message is, for example, a system information block (system information block, SIB) or a positioning system information block (positioning system information block, posSIB). The unicast message is, for example, radio resource control (radio resource control, RRC) signaling.

In another example, the positioning management device may send the configuration information for the at least two nodes by using an LTE positioning protocol (LTE positioning protocol, LPP) message. Alternatively, the positioning management device sends the configuration information for the at least two nodes to the access network device. For example, the positioning management device sends the configuration information for the at least two nodes to the access network device by using an NR positioning protocol annex (NR positioning protocol annex, NRPPa). Then, the access network device sends the configuration information for the at least two nodes to the terminal device by using the unicast or broadcast message.

In a possible implementation, the method further includes: The terminal device receives the location information of the at least two nodes, where the location information of the at least two nodes may be used to position the terminal device.

Optionally, the location information of the at least two nodes includes an association relationship between the at least two sets of configuration information and locations of the at least two nodes.

In a possible implementation, the terminal device measures at least two first signals based on the configuration information for the at least two nodes, to obtain at least two measurement results. The terminal device may send the at least two measurement results, to assist a network device in determining the location of the terminal device, or assist the network in learning measurement quality of the terminal, for example, for beam management by the network or for another communication purpose. The at least two measurement results are in one-to-one correspondence to the at least two nodes. In other words, the terminal device measures one first signal to obtain one measurement result.

According to a second aspect, a communication method is provided. The method may be performed by a second communication apparatus. The second communication apparatus may be a communication device or a communication apparatus that can support a communication device in implementing a function required by the method, for example, a chip system. For example, the communication apparatus is a first node, a chip system disposed in a first node, or another component configured to implement a function of a first node. The following uses an example in which the first node has a reflection function for description. For example, a reflector (for example, an intelligent metasurface) is disposed on the first node, or the first node is a reflector, or the first node is a part of a reflector. For ease of description, the following describes the communication method provided in the second aspect by using an example in which the second communication apparatus is the first node.

The communication method includes: The first node determines a first set of configuration information, and reflects a received second signal based on the first set of configuration information, where the first set of configuration information includes configuration information of a first sequence and/or first time domain configuration information.

In a possible implementation, the first set of configuration information indicates first duration, or the first set of configuration information indicates a first time domain pattern.

In a possible implementation, the first sequence is a sequence including M elements, and M is a positive integer. The M elements correspond to N symbols, the N symbols are located in one slot or a plurality of consecutive slots, and N is a positive integer. Alternatively, the M elements correspond to L slots, and L is a positive integer.

In a possible implementation, the first duration is less than or equal to one slot, or the first duration is greater than one slot.

In a possible implementation, the first set of configuration information includes first time information, and the first time information indicates effective time of the first set of configuration information. The first node uses the first set of configuration information at the time indicated by the first time information.

In a possible implementation, the method further includes: The first node receives the first set of configuration information. Alternatively, the first node receives first indication information, where the first indication information is used to activate the first set of configuration information in a plurality of sets of configuration information.

In a possible implementation, the method further includes: The first node sends information about the first node to a network device, where the information about the first node includes identification information of the first node and location information of the first node.

For beneficial effects of the second aspect and the implementations of the second aspect, refer to the descriptions of beneficial effects of the first aspect and the implementations of the first aspect. Details are not described herein again.

According to a third aspect, a communication method is provided. The method may be performed by a third communication apparatus. The third communication apparatus may be a communication device or a communication apparatus that can support a communication device in implementing a function required by the method, for example, a chip system. For example, the communication apparatus is a network device, a chip system disposed in a network device, or another component configured to implement a function of a network device. The network device may be an access network device, for example, a base station. Alternatively, the network device may be a positioning management device. Alternatively, the network device may be a core network device, for example, may be a mobility management entity (mobility management entity, MME) or a broadcast/multicast service center (broadcast/multicast service center, BMSC), or may include a corresponding function entity in a 5G system, for example, a core network control plane (control plane, CP) or user plane (user plan, UP) network function, for example, an SMF or an access and mobility management function AMF. A core network control plane may also be understood as a core network control plane function (control plane function, CPF) entity. For ease of description, the following describes the communication method provided in the third aspect by using an example in which the third communication apparatus is the network device.

The communication method includes: The network device sends or activates a first set of configuration information for a first node and a second set of configuration information for a second node, where the first set of configuration information includes configuration information of a first sequence, the second set of configuration information includes configuration information of a second sequence, and the first sequence is orthogonal to the second sequence. Alternatively, the first set of configuration information includes first time domain configuration information, and the second set of configuration information includes second time domain configuration information. Alternatively, the first set of configuration information includes configuration information of a first sequence and first time domain configuration information, and the second set of configuration information includes configuration information of a second sequence and second time domain configuration information.

In an example, the access network device may send the first set of configuration information for the first node and the second set of configuration information for the second node to a terminal device by using a broadcast message or a unicast message. The broadcast message is, for example, a SIB or a posSIB. The unicast message is, for example, RRC signaling.

In another example, the positioning management device may send configuration information for at least two nodes by using an LPP message. Alternatively, the positioning management device sends the first set of configuration information for the first node and the second set of configuration information for the second node to the access network device. For example, the positioning management device sends the first set of configuration information for the first node and the second set of configuration information for the second node by using an NRPPa. Then, the access network device sends the first set of configuration information for the first node and the second set of configuration information for the second node by using a unicast or broadcast message.

In a possible implementation, the first time domain configuration information indicates first duration, the second time domain configuration information indicates second duration, and the first duration is different from the second duration. Alternatively, the first time domain configuration information indicates a first time domain pattern, the second time domain configuration information indicates a second time domain pattern, and the first time domain pattern is different from the second time domain pattern.

In a possible implementation, the first sequence is a sequence including M elements, and M is a positive integer. The M elements correspond to N symbols, the N symbols are located in one slot or a plurality of consecutive slots, and N is a positive integer. Alternatively, the M elements correspond to L slots, and L is a positive integer.

In a possible implementation, the first duration is less than or equal to one slot, or the first duration is greater than one slot.

In a possible implementation, the first set of configuration information includes first time information, and the first time information indicates effective time of the first set of configuration information. The first set of configuration information includes second time information, and the second time information indicates effective time of the second set of configuration information.

In a possible implementation, the method further includes: The network device sends first information, where the first information indicates an association relationship between the first set of configuration information and the second set of configuration information, and at least two nodes.

In a possible implementation, that the first information indicates the association relationship between the first set of configuration information and the second set of configuration information, and the at least two nodes includes: The first information indicates an association relationship between the first set of configuration information and the second set of configuration information, and identification information of the at least two nodes. Alternatively, the first information indicates an association relationship between the first set of configuration information and the second set of configuration information, and configuration information for a second signal from the network device.

In a possible implementation, that the network device sends a first set of configuration information includes: The network device sends first indication information, where the first indication information is used to activate the first set of configuration information in a plurality of sets of configuration information.

In a possible implementation, the method further includes: The network device obtains information about the at least two nodes.

In a possible implementation, the network device is the positioning management device. That the network device obtains information about the at least two nodes includes: The network device receives the information about the at least two nodes sent by the access network device. Alternatively, the network device receives information separately sent by the at least two nodes.

For beneficial effects of the third aspect and the implementations of the third aspect, refer to the descriptions of beneficial effects of the first aspect and the implementations of the first aspect. Details are not described herein again.

According to a fourth aspect, an embodiment of this application provides a communication system, including a first node and a second node. The first node is configured to: determine a first set of configuration information, and reflect a received second signal based on the first set of configuration information. The second node is configured to: determine a second set of configuration information, and reflect a received second signal based on the second set of configuration information. The first set of configuration information and the second set of configuration make a first signal obtained by the first node by reflecting a third signal orthogonal to a first signal obtained by the second node by reflecting the third signal.

In a possible implementation, the first set of configuration information includes configuration information of a first sequence, the second set of configuration information includes configuration information of a second sequence, and the first sequence is orthogonal to the second sequence. Alternatively, the first set of configuration information includes first time domain configuration information, and the second set of configuration information includes second time domain configuration information. Alternatively, the first set of configuration information includes configuration information of a first sequence and first time domain configuration information, the second set of configuration information includes configuration information of a second sequence and second time domain configuration information, and the first sequence is orthogonal to the second sequence.

In a possible implementation, the first time domain configuration information indicates first duration, the second time domain configuration information indicates second duration, and the first duration is different from the second duration. Alternatively, the first time domain configuration information indicates a first time domain pattern, the second time domain configuration information indicates a second time domain pattern, and the first time domain pattern is different from the second time domain pattern.

In a possible implementation, the first sequence is a sequence including M elements, and M is a positive integer. The M elements correspond to N symbols, the N symbols are located in one slot or a plurality of consecutive slots, and N is an integer greater than or equal to 1. Alternatively, the M elements correspond to L slots, and L is a positive integer.

In a possible implementation, the first duration is less than or equal to one slot, or the first duration is greater than one slot.

In a possible implementation, the communication system further includes a network device, configured to configure the first set of configuration information and the second set of configuration information.

According to a fifth aspect, an embodiment of this application provides a communication apparatus. The communication apparatus has a function of implementing a behavior in the method embodiment according to any one of the first aspect to the third aspect. For details, refer to the related descriptions of the first aspect to the third aspect. Details are not described herein again. For example, the communication apparatus may be the terminal device in the first aspect, or the communication apparatus may be an apparatus that can implement the method provided in the first aspect, for example, a chip or a chip system. For example, the communication apparatus includes a processing module and a transceiver module. The transceiver module may be configured to receive at least two first signals obtained by at least two nodes through reflection, where the at least two first signals are mutually orthogonal. The processing module may be configured to measure the at least two first signals based on configuration information for the at least two nodes.

Alternatively, the communication apparatus may be the first node in the second aspect, or the communication apparatus may be an apparatus that can implement the method provided in the second aspect, for example, a chip or a chip system. For example, the communication apparatus includes a processing module and a transceiver module. The processing module may be configured to determine a first set of configuration information, where the first set of configuration information includes configuration information of a first sequence and/or first time domain configuration information. The transceiver module may be configured to reflect a received second signal based on the first set of configuration information.

Alternatively, the communication apparatus may be the network device in the third aspect, or the communication apparatus may be an apparatus that can implement the method provided in the third aspect, for example, a chip or a chip system. For example, the communication apparatus includes a processing module and a transceiver module. The processing module may be configured to configure a first set of configuration information and a second set of configuration information. The transceiver module may be configured to send the first set of configuration information and the second set of configuration information. The first set of configuration information includes configuration information of a first sequence, the second set of configuration information includes configuration information of a second sequence, and the first sequence is orthogonal to the second sequence. Alternatively, the first set of configuration information includes first time domain configuration information, and the second set of configuration information includes second time domain configuration information. Alternatively, the first set of configuration information includes configuration information of a first sequence and first time domain configuration information, and the second set of configuration information includes configuration information of a second sequence and second time domain configuration information.

In a possible design, the communication apparatus includes a corresponding means (means) or module configured to perform the method according to any one of the first aspect to the third aspect. For example, the communication apparatus includes a processing unit (sometimes also referred to as a processing module or a processor) and/or a transceiver unit (sometimes also referred to as a transceiver module or a transceiver). The transceiver unit may include a sending unit and a receiving unit, and it may also be understood as that the sending unit and the receiving unit are a same functional module. Alternatively, the transceiver unit may be understood as a general term of a sending unit and a receiving unit, and the sending unit and the receiving unit may be different functional modules. These units (modules) may perform corresponding functions in the method example according to any one of the first aspect to the third aspect. For details, refer to the detailed descriptions in the method example. Details are not described herein.

According to a sixth aspect, an embodiment of this application provides a communication apparatus. The communication apparatus may be the communication apparatus in the fifth aspect, or a chip or a chip system disposed in the communication apparatus in the fifth aspect. The communication apparatus may be a terminal device or a network device. The communication apparatus includes a communication interface and a processor, and optionally, further includes a memory. The memory is configured to store a computer program. The processor is coupled to the memory and the communication interface. When the processor reads the computer program or instructions, the communication apparatus performs the method performed by the terminal device, the first node, or the network device in the foregoing method.

According to a seventh aspect, an embodiment of this application provides a communication apparatus. The communication apparatus includes an input/output interface and a logic circuit. The input/output interface is configured to input and/or output information. The logic circuit is configured to perform the method according to any one of the first aspect to the third aspect.

According to an eighth aspect, an embodiment of this application provides a chip system. The chip system includes a processor, and may further include a communication interface, configured to implement the method according to any one of the first aspect to the third aspect. In a possible implementation, the chip system further includes a memory, configured to store a computer program. The chip system may include a chip, or may include a chip and another discrete component.

According to a ninth aspect, an embodiment of this application provides a communication system. The communication system includes a terminal device configured to implement a related function in the first aspect, a node configured to implement a related function in the second aspect, and a network device configured to implement a related function in the third aspect. Certainly, the communication system may include more terminal devices, more nodes, or more network devices.

According to a tenth aspect, this application provides a computer-readable storage medium. The computer-readable storage medium stores a computer program. When the computer program is run, the method according to any one of the first aspect to the third aspect is implemented.

According to an eleventh aspect, a computer program product is provided. The computer program product includes computer program code. When the computer program code is run, the method according to any one of the first aspect to the third aspect is performed.

For beneficial effects of the fifth aspect to the eleventh aspect and the implementations of the fifth aspect to the eleventh aspect, refer to the descriptions of the beneficial effects of the first aspect or the third aspect and the implementations of the first aspect or the third aspect.

### BRIEF DESCRIPTION OF DRAWINGS

FIG. 1 is a diagram of a working principle of a RIS module according to an embodiment of this application;
FIG. 2 is a diagram of RIS-based downlink positioning according to an embodiment of this application;
FIG. 3 is a diagram of a positioning architecture of a communication system to which an embodiment of this application is applicable;
FIG. 4 is a diagram of a network architecture of a communication system to which an embodiment of this application is applicable;
FIG. 5 is a diagram of a network architecture of another communication system to which an embodiment of this application is applicable;
FIG. 6 is a diagram of a network architecture of still another communication system to which an embodiment of this application is applicable;
FIG. 7 is a schematic flowchart of a communication method according to an embodiment of this application;
FIG. 8 is a diagram in which a node reflects a received signal based on configuration information of an OCC according to an embodiment of this application;
FIG. 9 is a diagram in which a node reflects a received signal based on configuration information of an OCC according to an embodiment of this application;
FIG. 10 is a diagram in which a node reflects a received signal based on delay duration according to an embodiment of this application;
FIG. 11 is a diagram in which a node reflects a received signal based on a time domain pattern according to an embodiment of this application;
FIG. 12 is another diagram in which a node reflects a received signal based on a time domain pattern according to an embodiment of this application;
FIG. 13 is a diagram of a structure of a communication apparatus according to an embodiment of this application; and
FIG. 14 is a diagram of another structure of a communication apparatus according to an embodiment of this application.

### DESCRIPTION OF EMBODIMENTS

Embodiments of this application relate to a positioning method. For ease of understanding solutions provided in embodiments of this application, some concepts, terms, and the like in embodiments of this application are first described.
(1) Positioning method: The positioning method may be classified as a Uu interface positioning method and a sidelink (sidelink, SL) positioning method based on a link or an interface for transmitting a positioning reference signal (positioning reference signal, PRS). It may be understood that a Uu interface is an interface between a base station and user equipment. An SL is a link between devices of a same type, for example, a link between terminal devices. The SL positioning method does not require participation of the base station.

For the Uu interface positioning method, based on a source of the PRS, the Uu interface positioning method is further classified as the following three types: a downlink positioning method, an uplink positioning method, and an uplink-downlink joint positioning method. It should be noted that an uplink and a downlink herein are relative. If a transmission direction from a network device to a terminal device is the downlink (this is used as an example in this specification), a transmission direction from the terminal device to the network device is the uplink; or if a transmission direction from a network device to a terminal device is the uplink, a transmission direction from the terminal device to the network device is the downlink.

In the downlink positioning method, the terminal device measures a downlink positioning reference signal (downlink positioning reference signal, DL-PRS) sent by a network side. The terminal device estimates a location of the terminal device based on a measurement result, to implement downlink positioning. The downlink positioning method includes, for example, a positioning method based on a downlink time difference of arrival (downlink time difference of arrival, DL-TDOA), or a positioning method based on a downlink angle of departure (downlink angle of departure, DL-AoD).

In the uplink positioning method, the network device measures an uplink positioning reference signal (uplink positioning reference signal, UL-PRS) sent by the terminal device. The network device estimates a location of the terminal device based on a measurement result, to implement uplink positioning. The uplink positioning reference signal may be an SRS, or another reference signal that may be for uplink measurement. This is not limited in embodiments of this application. For example, the SRS may be an uplink reference signal for multiple-input multiple-output (multiple-input multiple-output, MIMO) (a MIMO-SRS). Alternatively, the SRS may be an uplink positioning reference signal dedicated to positioning (a pos-SRS). The uplink positioning method includes, for example, a positioning method based on an uplink time difference of arrival (uplink time difference of arrival, UL-TDOA), or a positioning method based on an uplink angle of departure (uplink angle of departure, UL-AoD).

In the uplink-downlink joint positioning method, the network device measures an uplink positioning signal from the terminal device, and the terminal device measures a downlink positioning reference signal from the network device. A location of the terminal device is estimated based on a measurement result of the network device and a measurement result of the terminal device.

(2) Access network device: is an access device via which a terminal device accesses a mobile communication system in a wireless manner, for example, includes an access network (access network, AN) device, for example, a base station. Alternatively, the access network device may be a device that communicates with a terminal device over an air interface. The access network device may include an evolved NodeB (evolved NodeB) (also referred to as an eNB or an e-NodeB) in an LTE system or a long term evolution-advanced (long term evolution-advanced, LTE-A) system. The network device may also include a next generation NodeB (next generation NodeB, gNB) in a 5th generation (5th generation, 5G) system. Alternatively, the access network device may include an access node in a wireless fidelity (wireless fidelity, Wi-Fi) system, and the like. Alternatively, the access network device may be a relay station, an in-vehicle device, a future evolved public land mobile network (Public Land Mobile Network, PLMN) device, a device in a device-to-device (device-to-device, D2D) network, a device in a machine-to-machine (machine-to-machine, M2M) network, a device in an internet of things (internet of things, IoT) network, an access network device in a PLMN network, or the like. A specific technology and a specific device form used by the access network device are not limited in embodiments of this application.

In addition, the base station in embodiments of this application may include a central unit (central unit, CU) and a distributed unit (distributed unit, DU), and a plurality of DUs may be centrally controlled by one CU. The CU and the DU may be divided based on a protocol layer function that the CU and the DU each have in a wireless network. For example, functions of a packet data convergence protocol (packet data convergence protocol, PDCP) layer and a protocol layer above the packet data convergence protocol layer are set on the CU, and functions of protocol layers below the PDCP layer, for example, a radio link control (radio link control, RLC) layer and a media access control (medium access control, MAC) layer, are set on the DU. It should be noted that such protocol layer division is merely an example, and division may be performed at another protocol layer. A radio frequency apparatus may be remotely deployed and not placed in the DU, or may be integrated into the DU, or may be partially remotely disposed and partially integrated into the DU. This is not limited in embodiments of this application. In addition, in some embodiments, a control plane (control plane, CP) and a user plane (user plane, UP) of the CU may be separated into different entities for implementation: a control-plane CU entity (CU-CP entity) and a user-plane CU entity (CU-UP entity). In this network architecture, signaling generated by the CU may be sent to the terminal device via the DU, or signaling generated by UE may be sent to the CU via the DU. The DU may directly transparently transmit the signaling to the UE or the CU through protocol layer encapsulation without parsing the signaling.

In embodiments of this application, an apparatus configured to implement a function of the access network device may be the access network device, or may be an apparatus that can support the access network device in implementing the function, for example, a chip system, where the apparatus may be installed in the access network device. In the technical solutions provided in embodiments of this application, an example in which the apparatus configured to implement the function of the access network device is the access network device is used for description.

(3) Terminal device: also referred to as a terminal apparatus, is a device having a wireless transceiver function, and may send a signal to a network device, or receive a signal from a network device. The terminal device may include user equipment (user equipment, UE), and is sometimes referred to as a terminal, an access station, a UE station, a remote station, a wireless communication device, a user apparatus, or the like. The terminal device is configured to connect a person, an object, a machine, and the like, and may be widely used in various scenarios, for example, including but not limited to the following scenarios: cellular communication, D2D, vehicle-to-everything (vehicle-to-everything, V2X), machine-to-machine/machine type communication (machine-to-machine/machine type communication, M2M/MTC), IoT, virtual reality (virtual reality, VR), augmented reality (augmented reality, AR), industrial control (industrial control), self driving (self driving), remote medical (remote medical), a smart grid (smart grid), smart furniture, a smart office, a smart wearable, smart transportation, a smart city (smart city), an uncrewed aerial vehicle, and a robot.

By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The terminal device may further include a relay (relay). For example, the terminal device may be customer premises equipment (customer premises equipment, CPE). The CPE may receive a signal from the network device, and forward the signal to another terminal device. Alternatively, it is understood that any device that can perform data communication with a base station may be considered as the terminal device. If the terminal devices described above are located on a vehicle (for example, placed in the vehicle or installed in the vehicle), the terminal devices may be considered as in-vehicle terminal devices. For example, the in-vehicle terminal device is also referred to as an on-board unit (on-board unit, OBU) or a remote communication module (that is, a telematics box, T-box).

The terminal device may be used as the entire vehicle, or may be a built-in in-vehicle module, in-vehicle assembly, in-vehicle component, automotive chip, or on-board unit of the vehicle that is used as one or more components or units. The vehicle may implement a method in this application via the built-in in-vehicle module, in-vehicle assembly, in-vehicle component, automotive chip, or on-board unit.

In embodiments of this application, the terminal device may be an apparatus configured to implement a function of the terminal device, or may be an apparatus that can support the terminal device in implementing the function, for example, a chip system, where the apparatus may be installed in the terminal device. For example, the terminal device may alternatively be a vehicle detector. In embodiments of this application, the chip system may include a chip, or may include a chip and another discrete component. In the technical solutions provided in embodiments of this application, an example in which the apparatus configured to implement the function of the terminal device is the terminal device is used for description.

(4) Positioning management device: also referred to as a location management network element, is mainly responsible for positioning management. For example, the positioning management device receives a positioning request from another network element (for example, an access and mobility management network element), collects positioning data of a user, and obtains a user location through positioning calculation. The location management network element may further manage and configure a base station or a positioning management unit, to implement configuration on a positioning reference signal, and the like. A name of the positioning management device is not limited in embodiments of this application. For example, the positioning management device may also be referred to as a positioning device, a location server, a positioning service center, or a positioning processing center. The positioning management device in embodiments of this application may be a location management function (location management function, LMF) or a location management component (location management component, LMC), or may be a local location management function (local location management function, LLMF) located in an access network device, another network element having a similar function, or the like. For ease of description, the following embodiments are described by using an example in which the positioning management device is the LMF.

In a positioning architecture based on a 5G core network, a function of the LMF network element may be being responsible for supporting different types of location services related to target UE, including positioning the UE and transmitting assistance data to the UE. A control plane and a user plane of the LMF network element are respectively an evolved serving mobile location centre (evolved serving mobile location centre, E-SMLC) and a service location protocol (service location protocol, SLP). The LMF network element may perform information exchange with an ng-eNB/gNB and the UE as follows:
exchanging information with the next-generation evolved NodeB (next-generation evolved NodeB, ng-eNB)/gNB by using an NR positioning protocol A (NR positioning protocol A, NRPPa) message, for example, obtaining configuration information for a PRS and a sounding reference signal (sounding reference signal, SRS), cell timing, and cell location information; and
transferring UE capability information, assistance information, measurement information, and the like between the LMF network element and the UE by using an LTE positioning protocol (LTE positioning protocol, LPP) message.

(5) Time unit: is a slot (slot) or a symbol (symbol). One slot includes a plurality of symbols. Unless otherwise specified, the symbol is a time domain symbol. The time domain symbol herein may be an orthogonal frequency division multiplexing (orthogonal frequency division multiplexing, OFDM) symbol. When the OFDM symbol uses a normal cyclic prefix (normal cyclic prefix, NCP), one slot may include 14 symbols. When the OFDM symbol uses an extended cyclic prefix (extended cyclic prefix, ECP), one slot may include 12 symbols.

(6) Orthogonal sequence: may be used to extend a signal in dimensions of time domain, frequency domain, code domain, and the like, so that different signals are orthogonal. The orthogonal sequence in embodiments of this application is also referred to as a sequence. Two orthogonal sequences mean that an inner-scale product between two sequence components is equal to 0. For example, the orthogonal sequence may be an orthogonal cover code (orthogonal cover code, OCC), also referred to as an orthogonal spreading code or an orthogonal mask. The OCC may also be considered as an orthogonal sequence, and a same reference signal or sequence may be distinguished in a code domain dimension. For example, for the same reference signal, for example, at a same frequency domain position (for example, using a same subcarrier) and a same time domain position (for example, using a same OFDM symbol), when different reflectors or different antenna ports use different OCCs, interference between signals obtained by different reflectors through reflection or signals sent by different antenna ports may be suppressed. For example, when an OCC code length or a sequence length is 4, common OCCs are shown in Table 1. It can be learned from Table 1 that any two OCCs are mutually orthogonal, that is, an inner-scale product is 0.

**Table 1**

| | |
|---|---|
| OCC 1 | +1 +1 +1 +1 |
| OCC 2 | +1 -1 +1 -1 |
| OCC 3 | +1 +1 -1 -1 |
| OCC 4 | -1 -1 +1 +1 |
| OCC 5 | +1 -1 -1 +1 |
| OCC 6 | -1 +1 +1 -1 |

(7) Reflector: may reflect, refract, or transmit an electromagnetic wave, improving coverage and a capacity of a wireless network. The reflector, for example, includes an intelligent metasurface, which may also be referred to as a reconfigurable intelligent surface (reconfigurable intelligent meta-surface, RIS), or referred to as an intelligent reflection surface (intelligent reflection surface, IRS). In embodiments of this application, an example in which the reflector is the RIS is used. In addition, in embodiments of this application, an example in which the reflector reflects a signal is used. "Reflection" in embodiments of this application is reflection in a broad sense, and includes another signal processing process such as refraction and/or transmission.

The RIS is a digitally reconfigurable artificial electromagnetic surface, and is of an artificial composite structure formed by a large quantity of sub-wavelength digitally reconfigurable artificial electromagnetic units in a specific macroscopic arrangement manner (periodically or non-periodically). A basic unit and an arrangement manner of the RIS may be designed freely. Characteristics of an electromagnetic field at a specific spatial location may be controlled by changing state distribution of the basic unit. In addition, the RIS may also reflect a signal in a specific frequency domain interval. For example, RISs made from different metamaterials have different sensitivity to signals of different frequencies, and may implement reflection, transmission, or refraction of specific frequencies.

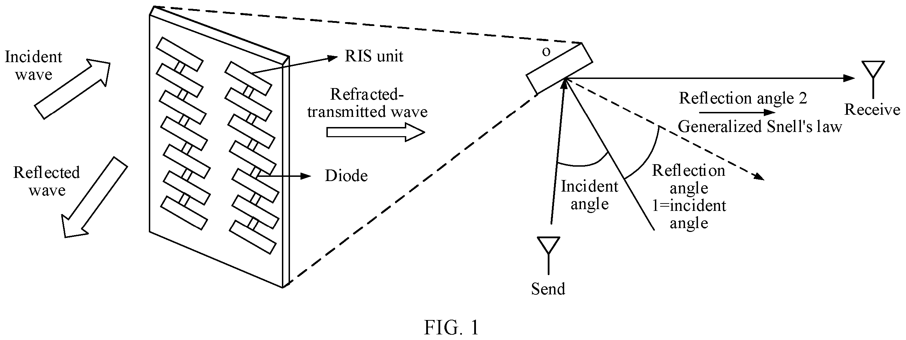

For example, FIG. 1 is a diagram of a working principle of a RIS module. As shown in FIG. 1, the RIS module includes a plurality of RIS units, and different RIS units are connected to each other via a diode. The RIS may reflect a received electromagnetic wave (an incident wave) to obtain a reflected wave. It should be understood that when the electromagnetic wave is propagated from a medium to another medium having a different refractive index, in addition to reflection, refraction also occurs. Therefore, the RIS can change a reflection phase difference of the electromagnetic wave. It may also be understood that the RIS enables the electromagnetic wave to follow the generalized Snell's law on a reflection or refraction interface. To be specific, the RIS can make a reflection angle of the electromagnetic wave unequal to an incident angle. Compared with a conventional surface (the reflection angle of the electromagnetic wave is a reflection angle 1), the RIS can make the reflection angle of the electromagnetic wave be a reflection angle 2. In other words, compared with the conventional surface, the RIS has a capability to shape the electromagnetic wave according to the generalized Snell's law.

Specifically, a reflection coefficient of each RIS unit may be controlled by controlling the RIS unit to adjust an amplitude and/or a phase of a received signal. That the RIS unit adjusts the amplitude and/or the phase of the received signal may also be considered as adjusting an amplitude and/or a phase of the RIS unit. It should be understood that each RIS unit has a different reflection coefficient, and the electromagnetic wave has a different reflection angle or refraction angle for the RIS unit. To be specific, a reflection angle or a refraction angle of the electromagnetic wave for the RIS may be adjusted by controlling the plurality of RIS units to separately adjust amplitudes and/or phases of received signals, to collaboratively implement fine three-dimensional (3D) passive beamforming for directional signal enhancement or null forming.

In some embodiments, an on/off state (an on state or an off state) of a PIN diode connected to a RIS unit may be controlled to control the RIS unit to adjust an amplitude and/or a phase of a received signal. For example, a different bias voltage is applied to the PIN diode, so that the PIN diode is in the on state or the off state, and the RIS unit connected to the PIN diode is in the on state or the off state. The plurality of RIS units included in the RIS are in different states, and the RIS has different adjustment amounts for the amplitudes and/or the phases of the received signals, so that the RIS has different reflection coefficients. Therefore, statuses of the RIS units may be controlled to control the RIS module to adjust the amplitudes and/or the phases of the received signals, for example, make a reflection phase difference of the electromagnetic wave for the RIS be 180°, to control the reflection coefficient of the RIS, that is, a phase and/or an amplitude of the RIS. In this way, the reflection angle of the electromagnetic wave for the RIS is unequal to the incident angle, and directional beamforming is implemented, so that coverage and a system capacity of a wireless network can be improved. The RIS has different reflection coefficients, so that the electromagnetic wave has different reflection angles, resulting in different beam directions. Therefore, it may be considered that the reflection coefficient of the RIS may be used to adjust a beam direction of the RIS.

It should be noted that the RIS in embodiments of this application may communicate with a network device (for example, an access network device or a positioning management device). For example, the RIS may send some information about the RIS to the network device, for example, identification information of the RIS and location information of the RIS. The RIS in embodiments of this application may also receive a configuration from the network device, and reflect a received signal based on the received configuration.

(8) "At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression means any combination of these items, including a single item (piece) or any combination of a plurality of items (pieces). For example, at least one item (piece) of a, b, or c may indicate: a, b, c, a-b, a-c, b-c, or a-b-c, where a, b, and c may be singular or plural.

In addition, unless otherwise stated, ordinal terms such as "first" and "second" in embodiments of this application are used to distinguish between a plurality of objects, and are not intended to limit sequences, time sequences, priorities, or importance degrees of the plurality of objects. For example, a first set of configuration information and a second set of configuration information are merely used to distinguish between different sets of configuration information, but do not indicate different priorities, sending sequences, importance degrees, or the like of the two sets of configuration information.

"Association" in embodiments of this application may also be referred to as "mapping", "correlation", or "correspondence". For example, that the first set of configuration information is associated with a first node may also be that the first set of configuration information corresponds to (or is mapped or correlated with) the first node. An association relationship between a plurality of sets of configuration information and a plurality of nodes may be (pre)configured.

As described above, a RIS may reflect, transmit, or refract an electromagnetic wave, to improve coverage of a wireless network, and may also be used for positioning, improve positioning accuracy. For example, there is an obstruction in a possible positioning scenario. Because a signal is blocked by the obstruction, a terminal device or an access network device side cannot receive a direct signal or a line-of-sight (line of sight, LOS) signal from a transmit end, or a small quantity of access network devices are deployed in an environment. Consequently, positioning accuracy is low, or even positioning cannot be implemented. That the signal is blocked by the obstruction and cannot be transmitted may also be considered as non-line-of-sight (not line of sight, NLOS) transmission. Non-line-of-sight transmission means that a radio signal can arrive at a receive end only through reflection, scattering, and diffraction when there is an obstacle. For example, when there is an obstacle on a propagation path between the access network device and the terminal device, in this case, a RIS may be deployed in the environment. Through rational deployment, line-of-sight transmission may be implemented between the RIS and the access network device and between the RIS and the terminal RIS. The RIS is used to reflect a signal sent by the access network device or the terminal device, to implement more accurate positioning.

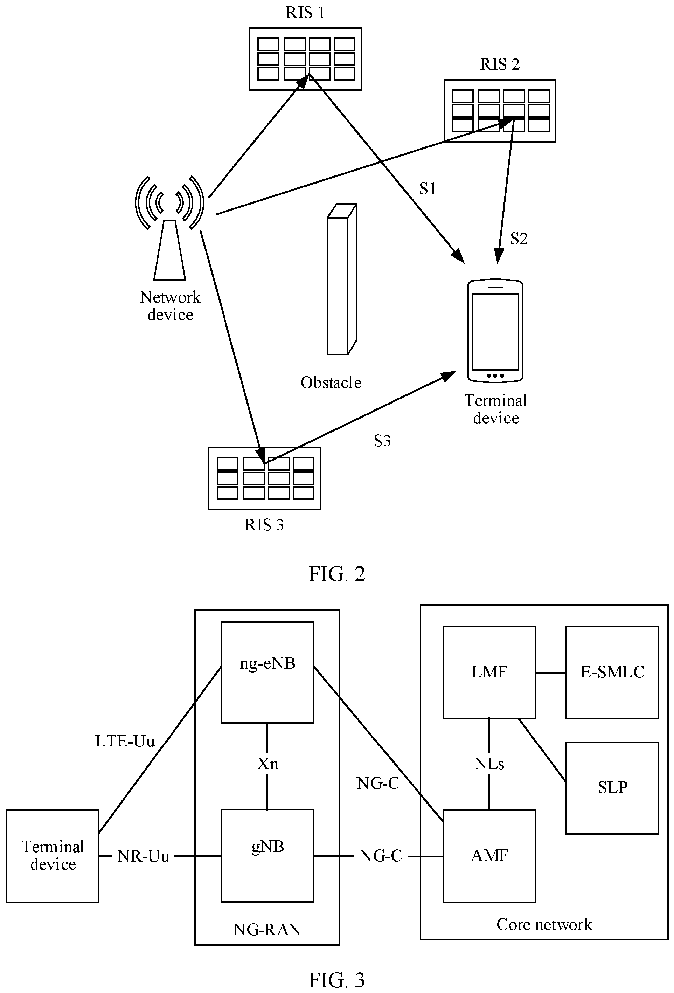

For example, FIG. 2 is a diagram of RIS-based downlink positioning. In FIG. 2, an example in which three RISs are deployed in the environment is used, and the three RISs are a RIS 1, a RIS 2, and a RIS 3. In FIG. 2, there is an obstacle between the access network device and the terminal device, and the obstacle prevents a signal or information sent by the access network device from directly arriving at the terminal device. In other words, NLOS transmission is performed between the access network device and the terminal device. Consequently, accuracy of positioning the terminal device is low, or even positioning cannot be implemented. However, because the RIS 1, the RIS 2, and the RIS 3 are deployed, and the signal sent by the access network device is reflected or refracted by the RIS 1, the RIS 2, and the RIS 3, the signal sent by the access network device can arrive at the terminal device. It is equivalent to that the RIS 1, the RIS 2, and the RIS 3 create a condition of line-of-sight (light of sight, LOS) transmission between the access network device and the terminal device. It may be understood that the signal sent by the access network device is the same for the RIS 1, the RIS 2, and the RIS 3, that is, a "second signal" in embodiments of this application. The terminal device can receive a line-of-sight transmission signal of the access network device obtained through reflection by the RIS. For example, a signal obtained by the RIS 1 by reflecting the signal sent by the access network device arrives at the terminal device through a path S1. Similarly, a signal that is sent by the access network device and that is reflected by the RIS 2 arrives at the terminal device through a path S2, and a signal that is sent by the access network device and that is reflected by the RIS 3 arrives at the terminal device through a path S3. For the terminal device, the RIS 1, the RIS 2, and the RIS 3 may also be equivalent to "virtual" access network devices. The terminal device measures the signals obtained by the RIS 1 to the RIS 3 through reflection, and determines a location of the terminal device based on a measurement result and location information of the RIS 1 to the RIS 3. It can be learned that the RIS 1, the RIS 2, and the RIS 3 are deployed, so that more "virtual" access network devices participate in positioning in the environment, improving the accuracy of positioning the terminal device.

However, the RIS can perform only amplification, phase modulation, and the like on a received signal, but cannot change other features of the signal. Therefore, for the receive end, signals from different RISs obtained through reflection are essentially the same. The receive end receives a signal obtained by "aliasing" of a plurality of reflected signals. In a possible application scenario, for example, in positioning or beam management, the receive end needs to identify signals from different intelligent metasurfaces obtained through reflection.

In a possible implementation, the transmit end may send different reference signals in different beam directions. In this case, RISs in different beam directions receive different reference signals. Different RISs reflect reference signals, and then signals obtained through reflection arrive at the receive end. The receive end may identify the signals obtained through reflection from the different RISs by distinguishing between beam directions, to implement positioning. However, when a frequency supported in a system is low, there is no beam technology, and therefore different reference signals cannot be sent in different beam directions. In addition, in this solution, reference signals sent by using a same beam cannot be distinguished. Moreover, because the transmit end is required to send different reference signals in different beam directions, complexity of the transmit end is increased, and a requirement on a capability of the transmit end is high.

In view of this, the technical solutions in embodiments of this application are provided. In embodiments of this application, different RISs may reflect received signals by using different OCCs and/or time domain resources, so that the receive end can distinguish, from signals from different RISs, a signal obtained by each RIS through reflection, to implement positioning.

The technical solutions provided in embodiments of this application may be applied to a 5th generation (5th generation, 5G) mobile communication system, or may be applied to an LTE system, or may be applied to a next generation mobile communication system or another similar communication system. Certainly, the technical solutions in embodiments of this application may also be applied to another communication system, provided that the communication system has a requirement for positioning a terminal. For example, the technical solutions provided in embodiments of this application may also be applied to a vehicle-to-everything (vehicle-to-everything, V2X) system, an internet of things (internet of things, IoT) system, a narrowband internet of things (narrowband internet of things, NB-IoT) system, and the like, for example, a wireless fidelity (wireless fidelity, Wi-Fi)-based IoT network or a wearable Wi-Fi network. In addition, the communication system is further applicable to a future-oriented communication technology. The systems described in embodiments of this application are intended to describe the technical solutions in embodiments of this application more clearly, and constitute no limitation on the technical solutions provided in embodiments of this application. A person of ordinary skill in the art may learn that with evolution of network architectures, the technical solutions provided in embodiments of this application are also applicable to a similar technical problem.

For example, FIG. 3 is a diagram of a positioning architecture of a communication system to which an embodiment of this application is applicable. As shown in FIG. 3, involved network elements/modules mainly include three parts: a next generation radio access network (next generation radio access network, NG-RAN), a terminal device, and a core network. The core network includes an LMF, an access and mobility management function (access and mobility management function, AMF), an SLP, an E-SMLC, and the like. A positioning server, that is, a location management function (location management function, LMF), is connected to the AMF, and the LMF and the AMF are connected to each other through an NLs interface. The LMF is responsible for supporting different types of location services related to a terminal, including positioning the terminal and transferring assistance data to the terminal. The AMF may receive a terminal-related location service request from a 5th generation core network location service (5th generation core network location service, 5GC LCS) entity, or the AMF may enable some location services on behalf of a specific terminal, and forward a location service request to the LMF. After obtaining location information returned by the terminal, the AMF returns the related location information to the 5GC LCS entity.

The NG-RAN may include a next generation NodeB (next generation NodeB, gNB), a next generation evolved NodeB (next generation evolved NodeB, ng-eNB), a future evolved network node, or the like. The gNB and the ng-eNB are connected to each other through an Xn interface, and the LMF and the ng-eNB/gNB are connected to each other through an NG-C interface.

It should be understood that FIG. 3 is an example for describing the communication system to which embodiments of this application are applicable, and does not specifically limit a type, a quantity, a connection manner, and the like of network elements included in the communication system to which this application is applicable.

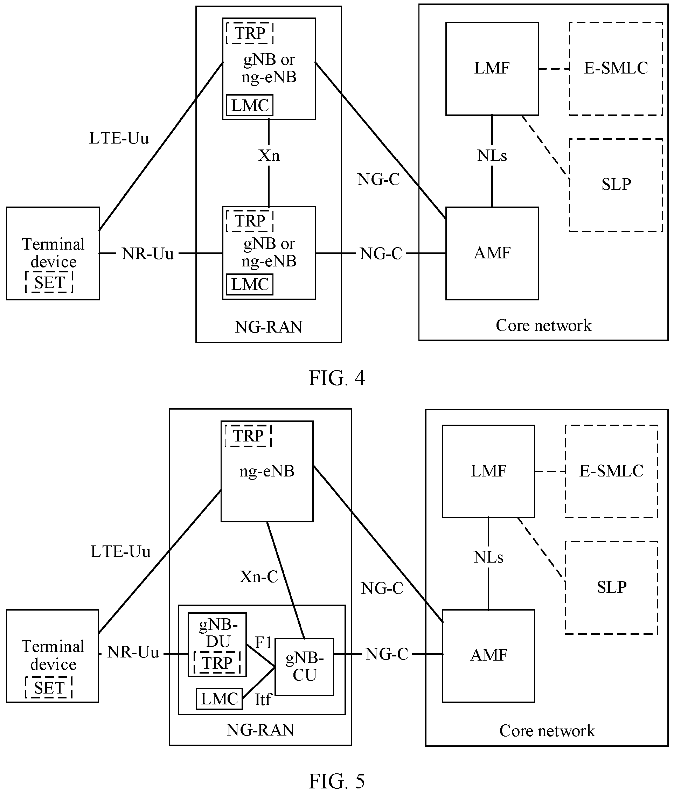

For example, FIG. 4 shows a network architecture of a communication system to which an embodiment of this application is applicable. The communication system includes a core network, an NG-RAN, and a terminal. The core network includes network elements/modules such as an LMF, an AMF, a secure user plane location (secure user plane location, SUPL) location platform (SUPL location platform, SLP), and an E-SMLC. The NG-RAN includes network elements/modules such as a gNB and an ng-eNB. For specific functions of network elements/modules such as the LMF, the AMF, the SLP, the E-SMLC, the gNB, and the ng-eNB and connection relationships between the network elements/modules, refer to the foregoing descriptions of the related part in FIG. 3. Details are not described herein again.

A difference from FIG. 3 lies in that in the network architecture shown in FIG. 4, an LMC is added to the NG-RAN, and the LMC is specifically deployed in a manner of disposal inside a base station, for example, disposal in the gNB or the ng-ENB. In this network architecture, the LMC serves as an internal function of the base station. Therefore, no new interface needs to be introduced.

FIG. 5 shows a network architecture of another communication system to which an embodiment of this application is applicable. As shown in FIG. 5, the communication system also includes a core network, an NG-RAN, and a terminal. A difference from FIG. 4 lies in that an LMC in the network architecture shown in FIG. 5 serves as an independent logical node in the NG-RAN, and is connected to a base station through a new interface. For example, in FIG. 5, the LMC is connected to a gNB-CU through an interface Itf.

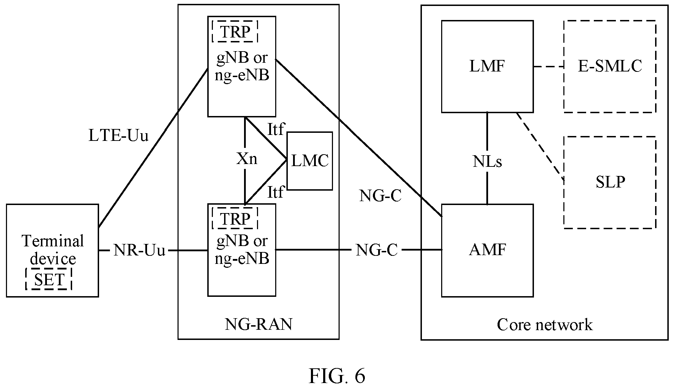

FIG. 6 shows a network architecture of still another communication system to which an embodiment of this application is applicable. As shown in FIG. 6, the communication system also includes a core network, an NG-RAN, and a terminal. An LMC serves as an independent logical node in the NG-RAN. A difference from FIG. 5 lies in that the LMC may be connected to a plurality of base stations through new interfaces in FIG. 5. In FIG. 6, an example in which the LMC is connected to two base stations is used. In specific implementation, the LMC may alternatively be connected to more base stations.

FIG. 3 to FIG. 6 are examples for describing the communication system to which embodiments of this application are applicable, and do not specifically limit a type, a quantity, a connection manner, and the like of network elements included in the communication system to which this application is applicable. In addition, a network element/module shown by a dashed line in FIG. 3 to FIG. 6 is not necessary but optional. For example, the E-SMLC or the SLP is not necessary. Alternatively, a network element/module shown by a dashed line is another form of existence. For example, the gNB or the ng-eNB is also referred to as a transmission-reception node (transmission-reception point, TRP) in some embodiments, and the terminal device is referred to as a secure user plane location (secure user plane location, SUPL) enabled terminal (SUPL enabled terminal, SET) in some embodiments.

A communication method provided in embodiments of this application may be applied to positioning, for example, uplink positioning, downlink positioning, uplink-downlink positioning, or sidelink positioning. It should be noted that an "uplink" and a "downlink" herein are relative. If a transmission direction from an access network device to a terminal device is the downlink (this is used as an example in this specification), a transmission direction from the terminal device to the access network device is the uplink; or if a transmission direction from an access network device to a terminal device is the uplink, a transmission direction from the terminal device to the access network device is the downlink. A "sidelink" is between devices of a same type. For example, a transmission direction from a terminal device to a terminal device is a sidelink. For another example, a transmission direction from an access network device to an access network device is also a sidelink.

A "first signal" and a "second signal" in embodiments of this application each may be a positioning reference signal (positioning reference signal, PRS), a sounding reference signal (sounding reference signal, SRS), a positioning-sounding reference signal (positioning-sounding reference signal, pos-SRS), a tracking reference signal (tracking reference signal, TRS), a channel state information-reference signal (channel state information-reference signal, CSI-RS), a demodulation reference signal (demodulation reference signal, DM-RS), a phase noise tracking reference signal (phase noise tracking reference signal, PT-RS), a sidelink reference signal, or a random access preamble (preamble).

In the following description process, an example in which the method is applied to the communication system shown in any one of FIG. 3 to FIG. 6 is used. It should be noted that embodiments of this application only use the communication systems in FIG. 3 to FIG. 6 as examples, and are limited to the scenarios. In addition, the method relates to the access network device and the terminal device, and may further relate to a positioning management device and the like. In the following, an example in which the positioning management device is an LMF network element is used. It should be understood that in future communication such as 6G, the positioning management device may still be the LMF network element or have another name. This is not limited in embodiments of this application. In addition, the access network device may be an access network device currently serving the terminal device. The access network device may be a device in the NG-RAN, for example, the gNB or the ng-eNB. Alternatively, the access network device may be the LMC. As described above, if the LMC serves as an internal function of an access network device, the access network device is an access network device in which the LMC is located. If a deployment solution of the LMC is shown in FIG. 4 or FIG. 5, that is, the LMC serves as an independent logical node, and is connected to one or more access network devices through an interface, the access network device is any access network device connected to the LMC.

In embodiments of this application, an example in which the provided communication method is applied in a radio control resource (radio resource control, RRC) connected (connected) state (denoted as an RRC_connected state) is used. The communication method provided in embodiments of this application may also be applied to a terminal device in an RRC non-connected state (for example, an RRC idle state or an RRC inactive state). It may be understood that when the terminal device is in the non-connected state, the terminal device may be paged back to the connected state, and then the communication method provided in embodiments of this application is performed. Alternatively, when the terminal device is in the non-connected state, the terminal device may send a reference signal by using a reference signal related configuration. For example, after entering the non-connected state, the terminal device may retain a reference signal related configuration in the connected state, or obtain a reference signal related configuration by using system information.

The following describes in detail the solutions provided in embodiments of this application with reference to the accompanying drawings. It should be noted that in the accompanying drawings corresponding to embodiments of this application, all steps indicated by dashed lines are optional steps. A node in embodiments of this application is a node having a signal reflection function. For example, the node is provided with a RIS, or the node is a RIS. A plurality of nodes may be located on a same reflector. For example, one reflector is provided with two RISs, and the two RISs are equivalent to two nodes. Because the node has the signal reflection function, a coverage area can be expanded. For example, a plurality of nodes may be deployed, and a signal sent by the access network device is received by the terminal device after being reflected by the plurality of nodes. The terminal device may receive a plurality of signals, and measure the plurality of signals, to determine a location of the terminal device. In embodiments of this application, a network device may be the access network device, or may be the positioning management device. A procedure of the communication method varies based on a specific implementation of the network device. Details are described in detail below. In addition, the node in embodiments of this application is a node having the signal reflection function. For example, the node is provided with a RIS, or the node is a RIS.

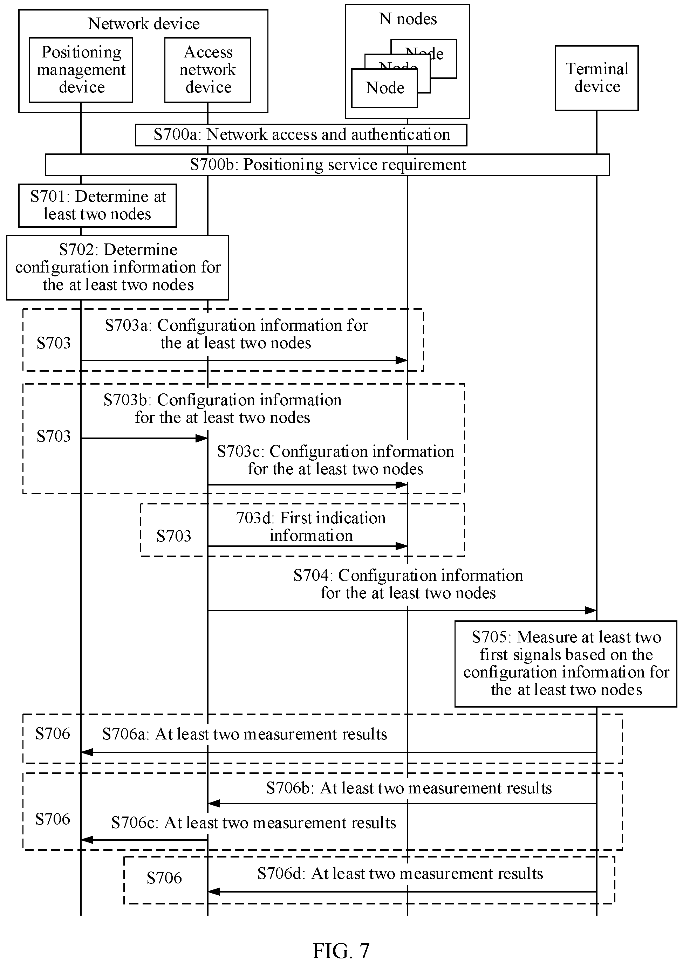

FIG. 7 is a schematic flowchart of a communication method according to an embodiment of this application. An example in which a procedure shown in FIG. 7 is applied to positioning is used, and an example in which the communication method is performed by a network device, at least two nodes, and a terminal device is used.

S701: The network device determines the at least two nodes.

A plurality of nodes may be deployed in a network, and for different positioning requirements, nodes that may participate in positioning are also different. Each node may complete a network access and authentication process by exchanging some information with the network device, as shown in S700a. Each node may send identification information (ID) and the like of the node to an access network device, to complete the network access and authentication process. The terminal device, the network device, or another third-party entity having a positioning requirement may send a positioning service requirement to the network device. As shown in S700b, in FIG. 7, when the terminal device has a positioning requirement, the terminal device may send a positioning service requirement to a positioning management device. When determining that the terminal device has the positioning requirement, the network device may obtain information about each node, to determine a node suitable for participating in positioning. For example, the network device may request each node to report related information of the node, and each node sends the related information of the node to the network device in response to the request of the network device. The related information of the node may include, for example, identification information of the node or location information of the node. The location information of the node may include one or more of an orientation, a pitch angle, coordinates, and other information, for example, one or more of an orientation of the node relative to a reference point, a pitch angle of the node relative to a reference point, and the coordinates of the node.

For example, the network device may be the access network device. The node may report the related information of the node to the access network device. For example, the node may actively report the related information of the node after being powered on or turned on. For another example, the node may report the related information of the node in response to a request of the access network device. Specifically, the access network device may send a request message to each node, where the request message is used to request the related information of the node. Any node receives the request message, and sends related information of the node to the access network device in response to the request message. After obtaining related information of at least one node, the access network device may send the information about the at least one node to the positioning management device. Alternatively, the positioning management device may send a request message to the access network device, to request to obtain related information of at least one node. The access network device receives the request message, and sends the obtained related information of the at least one node to the positioning management device.

After obtaining the related information of the at least one node, the positioning management device may determine, based on the related information of the at least one node, the at least two nodes participating in positioning. Alternatively, after obtaining the related information of the at least one node, the access network device may directly determine, based on the related information of the at least one node, the at least two nodes participating in positioning. If the positioning management device determines the at least two nodes, the at least two nodes may be indicated to the access network device, so that the access network device knows that a node participating in positioning is the at least two nodes. For example, the positioning management device may send identification information of the at least two nodes to the access network device. If the access network device determines the at least two nodes, the at least two nodes may be indicated to the positioning management device. In FIG. 7, an example in which the positioning management device determines the at least two nodes is used.

S702: The network device determines configuration information for the at least two nodes.

The network device determines the at least two nodes, and configures, for the at least two nodes, the configuration information for signal processing. For ease of description, a signal received by the node is referred to as a second signal, and a signal obtained by reflecting the second signal is referred to as a first signal. The second signal may be a positioning reference signal from the access network device.

The configuration information for the at least two nodes may include configuration information for each of the at least two nodes. In other words, the configuration information for the at least two nodes may be at least two sets of configuration information, and one set of configuration information corresponds to one node. For example, the at least two nodes include a first node and a second node. The configuration information for the at least two nodes includes a first set of configuration information for the first node and a second set of configuration information for the second node. The first node reflects a received second signal based on the first set of configuration information, to obtain a first signal. The second node reflects a received second signal based on the second set of configuration information, to obtain a first signal.

Alternatively, the configuration information for the at least two nodes may be used by each node to determine configured configuration information. For example, the at least two nodes include a first node and a second node. The configuration information for the at least two nodes may enable the first node to determine a first set of configuration information, and may also enable the second node to determine a second set of configuration information. For example, the network device may broadcast the configuration information for the at least two nodes. The first node receives the configuration information for the at least two nodes, and may determine the first set of configuration information. The second node receives the configuration information for the at least two nodes, and may determine the second set of configuration information. The configuration information for the at least two nodes may be determined by the access network device, or may be determined by the positioning management device. In FIG. 7, an example in which the positioning management device determines the configuration information for the at least two nodes is used. For ease of description, an example in which the at least two nodes include the first node and the second node is used subsequently.

The first signal obtained by the first node through reflection and the first signal obtained by the second node through reflection may be received by the terminal device. The terminal device may receive at least two first signals obtained by the at least two nodes through reflection, and the two first signals are mutually orthogonal. The terminal device receives a signal obtained by superposing the at least two first signals, but the terminal device cannot determine a node that obtains each of the at least two first signals through reflection. In a possible scenario, for example, a scenario such as positioning or beam management, the terminal device needs to distinguish between the nodes that obtain the at least two first signals through reflection. Therefore, the first set of configuration information and the second set of configuration information that are configured by the network device may be used to distinguish between the first signal obtained by the first node through reflection and the first signal obtained by the second node through reflection. In addition, the first set of configuration information and the second set of configuration may further make the first signal obtained by the first node through reflection and the first signal obtained by the second node through reflection mutually orthogonal, to reduce interference.

In this embodiment of this application, a specific implementation form of the configuration information for the at least two nodes includes the following several types.

Implementation form 1: The configuration information for the at least two nodes includes configuration information of at least two orthogonal sequences. For example, the configuration information for the at least two nodes includes the first set of configuration information for the first node and the second set of configuration information for the second node. The first set of configuration information includes configuration information of a first sequence, the second set of configuration information includes configuration information of a second sequence, and the first sequence is orthogonal to the second sequence. Because the first sequence is orthogonal to the second sequence, the first signal obtained by the first node by reflecting the second signal and the first signal obtained by the second node by reflecting the second signal are mutually orthogonal in code domain.

In an example, the network device separately configures determined configuration information for each node. For example, the configuration information for the at least two nodes includes the first set of configuration information and the second set of configuration information, the first set of configuration information includes the first sequence, and the second set of configuration information includes the second sequence. The network device sends the first set of configuration information to the first node, and sends the second set of configuration information to the second node. Alternatively, the configuration information for the at least two nodes includes the first sequence and the second sequence, where there is an association relationship between the first sequence and the second sequence and an association relationship between the first node and the second node. The network device may broadcast the configuration information for the at least two nodes, that is, broadcast the first sequence and the second sequence. The first node receives the first sequence and the second sequence, and may determine, based on the association relationship between the first sequence and the second sequence and the first node and the second node, that the first sequence is configured for the first node. Similarly, the second node receives the first sequence and the second sequence, and may determine, based on the association relationship, that the second sequence is configured for the second node.

In another example, the configuration information for the at least two nodes includes the first set of configuration information and the second set of configuration information, the first set of configuration information includes a length of the first sequence, and the second set of configuration information includes a length of the second sequence. In other words, orthogonal sequences are indirectly configured for the at least two nodes by configuring lengths of sequences. It may be understood that an orthogonal sequence set with a fixed length is known or predefined. Therefore, the orthogonal sequence set may be indirectly indicated by configuring lengths of the orthogonal sequences. Any two orthogonal sequences with a same length are mutually orthogonal. Therefore, the first node and the second node only need to select one orthogonal sequence from an orthogonal sequence set corresponding to the length. For example, selection may be performed in an agreed or default order. For example, the first node selects a 1^{st} sequence in the orthogonal sequence set, and the second node selects a 2^{nd} sequence in the orthogonal sequence set. Alternatively, the configuration information for the at least two nodes includes one piece of length information. For example, the network device may carry the configuration information (that is, the one piece of length information) in a broadcast message, and a node that receives the configuration information determines, in an agreed or default order based on a length indicated by the length information, an orthogonal sequence for the node from an orthogonal sequence set corresponding to the length.

In still another example, the configuration information for the at least two nodes includes the first set of configuration information and the second set of configuration information, the first set of configuration information includes index information of the first sequence, and the second set of configuration information includes index information of the second sequence. For example, an orthogonal sequence set may be predefined or preconfigured, and each orthogonal sequence has a corresponding index. Therefore, the orthogonal sequence may be indicated by using the index. For example, the network device may send the index information of the first sequence to the first node, and send the index information of the second sequence to the second node. Alternatively, an index may be associated with a node, and each node may determine, based on the association relationship, a sequence configured for the node. The association relationship between the index and the node may be (pre)configured or (pre)defined. For example, the configuration information for the at least two nodes includes index information of a plurality of sequences. For example, the network device may carry the configuration information (that is, the index information of the plurality of sequences) in a broadcast message. The first node and the second node receive the configuration information, and may determine, based on the association relationship between the index and the node, that the first sequence is configured for the first node and the second sequence is configured for the second node.

Optionally, the configuration information of the first sequence may include a length of the first sequence and index information of the first sequence, and the configuration information of the second sequence may include a length of the second sequence and index information of the second sequence.

An OCC may act in a slot. In other words, a minimum granularity of the OCC is a symbol. For example, the first sequence is a first OCC, and the second sequence is a second OCC. The first OCC is a sequence including M elements, the M elements correspond to N symbols, and the N symbols are located in one slot or a plurality of consecutive slots. M and N are both positive integers. To be specific, the M elements act in the one slot or the plurality of consecutive slots. For example, the M elements are S_1, S_2, ..., and S_M, where S_1, S_2, ..., and S_M respectively correspond to N symbols n_1, n_2, ..., n_N. The symbols n_1, n_2, ..., n_N are located in one slot or two consecutive slots. It may be considered that the minimum granularity of the OCC is the symbol. Similarly, the second OCC is also an orthogonal sequence including M elements, the M elements correspond to N symbols, and the N symbols are located in one slot or a plurality of consecutive slots. When the OCC acts in one slot or a plurality of consecutive slots, a delay can be effectively reduced. In addition, a quantity of symbols corresponding to each element may be the same, so that complexity of implementing signal reflection on a node side is reduced.

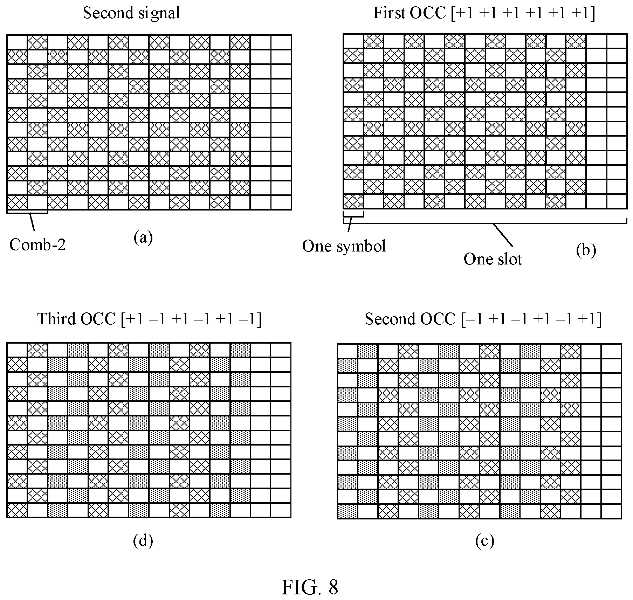

For example, FIG. 8 is a diagram in which a node reflects a received signal based on configuration information of an OCC. In FIG. 8, an example in which the at least two nodes include the first node, the second node, and a third node is used. In FIG. 8, an example in which one slot includes 14 symbols is used. An example in which an OCC indicated by configuration information of the first OCC for the first node is a sequence [+1 +1 +1 +1 +1 +1] including six elements, and an OCC indicated by configuration information of the second OCC for the second node is a sequence [-1 +1 -1 +1 -1 +1] is used. (a) in FIG. 8 shows a pattern of the second signal sent by the network device. For example, the second signal whose pattern is comb-2 is repeatedly sent for six times in one slot. (b) in FIG. 8 shows a pattern of a signal 1 obtained by the first node through reflection based on the first OCC. The signal 1 is one of the at least two first signals. (c) in FIG. 8 shows a pattern of a signal 2 obtained by the second node through reflection based on the second OCC. The signal 2 is one of the at least two first signals other than the signal 1. It can be learned from (b) in FIG. 8 and (c) in FIG. 8 that the first signal obtained by the first node through reflection based on the first OCC and the first signal obtained by the second node through reflection based on the second OCC are mutually orthogonal. An OCC indicated by configuration information of a third OCC for the third node may be a sequence [+1 -1 +1 -1 +1 -1]. Correspondingly, (d) in FIG. 8 shows a pattern of a signal 3 obtained by the third node through reflection based on the third OCC. The signal 3 is another first signal other than the signal 1 and the signal 2. The three first signals obtained by the first node, the second node, and the third node through reflection are orthogonal pairwise. In addition, in FIG. 8, an example in which each of the six elements in the OCC corresponds to two symbols is used. In other words, each element corresponds to a same quantity of symbols. Therefore, complexity of implementing signal transmission on the node side is low.

In some embodiments, an OCC may act in a plurality of slots. In other words, the OCC is applied between slots. It may also be considered that a minimum granularity of the OCC is a slot. For example, a first OCC is an orthogonal sequence including M elements, the M elements correspond to L slots, and M and L are both positive integers. For example, the M elements include S_1, S_2, ..., and S_M, where S_1, S_2, ..., and S_M respectively correspond to slots k_1, k_2, ..., and k_L. Therefore, it may also be considered that the minimum granularity of the OCC is the slot. Similarly, a second OCC is also an orthogonal sequence including M elements, and the M elements correspond to L symbols. Because the minimum granularity of the OCC is the slot, complexity of implementing signal reflection on a node side is reduced. In addition, more OCCs can be used, a capacity is improved, and applicability to a scenario in which there are a large quantity of nodes in a network is achieved. In addition, a quantity of slots corresponding to each element may be the same, so that the complexity of implementing signal reflection on the node side is reduced.

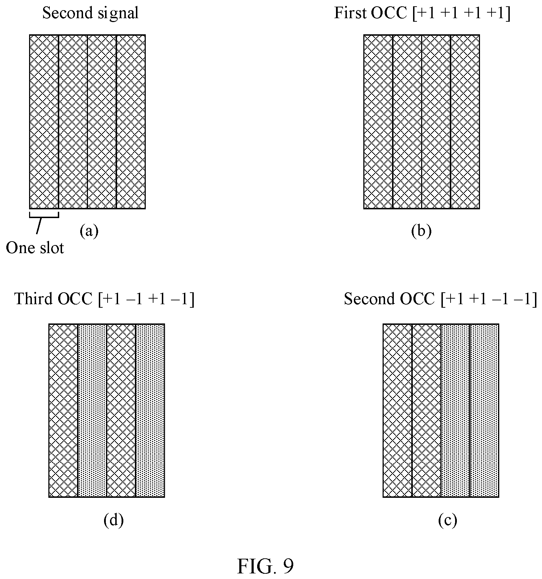

For example, FIG. 9 is another diagram in which a node reflects a received signal based on configuration information of an OCC. A difference from FIG. 8 lies in that in FIG. 9, an example in which the OCC is applied between slots is used. An example in which an OCC indicated by configuration information of the first OCC for the first node is a sequence [+1 +1 +1 +1] including four elements, and an OCC indicated by configuration information of the second OCC for the second node is a sequence [+1 +1 -1 -1] is used. (a) in FIG. 9 shows the second signal sent by the network device in four consecutive slots. (b) in FIG. 9 shows a pattern of the first signal obtained by the first node through reflection based on the first OCC. (c) in FIG. 9 shows a pattern of another first signal obtained by the second node through reflection based on the second OCC. It can be learned from (b) in FIG. 9 and (c) in FIG. 9 that the first signal obtained by the first node through reflection based on the first OCC and the first signal obtained by the second node through reflection based on the second OCC are mutually orthogonal. An OCC indicated by configuration information of a third OCC for a third node may be a sequence [+1 -1 +1 -1]. Correspondingly, (d) in FIG. 9 shows a pattern of another first signal obtained by the third node through reflection based on the third OCC. The three first signals obtained by the first node, the second node, and the third node through reflection are orthogonal pairwise. In addition, in FIG. 9, an example in which one element in the OCC corresponds to one slot is used. In other words, each element corresponds to a same quantity of slots. Therefore, complexity of implementing signal transmission on the node side is low.

Implementation form 2: The first set of configuration information includes first time domain configuration information, and the second set of configuration information includes second time domain configuration information, so that the first signal obtained by the first node by reflecting the second signal and the first signal obtained by the second node by reflecting the second signal are mutually orthogonal in time domain.

In some embodiments, the first time domain configuration information indicates first duration, the second time domain configuration information indicates second duration, and the first duration is different from the second duration. The first duration indicates the first node to reflect a signal after the first duration after receiving the signal. The second duration indicates the second node to reflect a signal after the second duration after receiving the signal. Different duration is configured for different nodes, so that signals obtained by different nodes through reflection are mutually orthogonal. A minimum unit of delay duration for signal reflection by each node may be a symbol, or may be a slot. For example, the first duration may be less than or equal to one slot. In other words, the minimum unit of the delay duration for signal reflection by the first node is the symbol, so that a delay is short. Alternatively, the first duration is greater than P slots, and P is an integer greater than or equal to 1. In other words, the minimum unit of the delay duration for signal reflection by the first node is a slot, so that complexity of signal reflection by the node is low. Based on duration configured for each node, each node may control a delay of reflection of a received signal by a RIS unit by controlling an on/off state of a PIN diode connected to the RIS unit or by controlling the RIS unit to adjust a phase of the received signal.

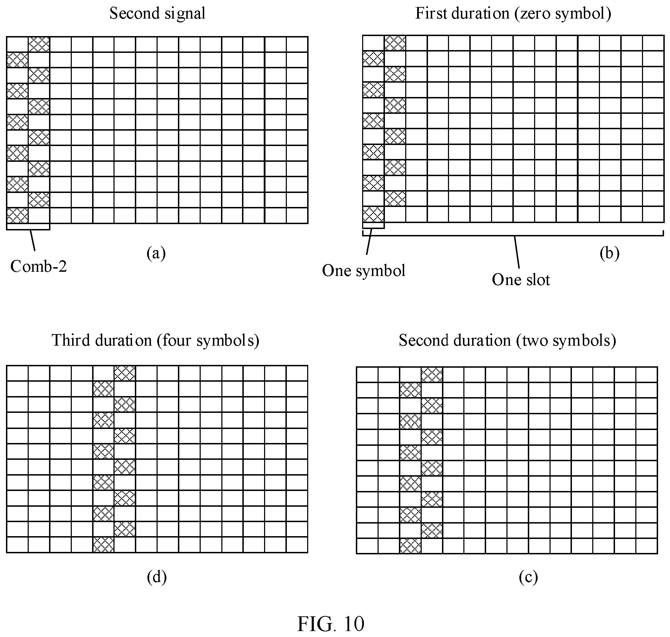

For example, FIG. 10 is a diagram in which a node reflects a received signal based on delay duration. In FIG. 10, an example in which the first duration is 0 symbol and the second duration is two symbols is used. (a) in FIG. 10 shows a pattern of the second signal sent by the network device. (b) in FIG. 10 shows a pattern of the first signal obtained by the first node through reflection based on the first duration. (c) in FIG. 10 shows a pattern of the first signal obtained by the second node through reflection based on the second duration. It can be learned from (b) in FIG. 10 and (c) in FIG. 10 that the first signal obtained by the first node through reflection based on the first duration and the first signal obtained by the second node through reflection based on the second duration are mutually orthogonal. Certainly, if there are more nodes, for example, the at least two nodes further include a third node, the network device may configure third time domain configuration information for the third node. The third time domain configuration information indicates third duration, for example, four symbols. Correspondingly, (d) in FIG. 10 shows a pattern of a first signal obtained by the third node through reflection based on the third duration. The three first signals obtained by the first node, the second node, and the third node through reflection are orthogonal pairwise.

In some embodiments, the first time domain configuration information indicates a first time domain pattern, the second time domain configuration information indicates a second time domain pattern, and the first time domain pattern is different from the second time domain pattern. The first time domain pattern indicates a first time domain resource occupied by one first signal of the at least two first signals, and the second time domain pattern indicates a second time domain resource occupied by another first signal of the at least two first nsignals. The first time domain resource is different from the second time domain resource. A RIS disposed on each node may implement different time domain patterns by controlling an on/off state of a PIN diode connected to a RIS unit. The time domain pattern may be a time domain pattern located in one slot, or may be a time domain pattern located in a plurality of slots. In other words, the time domain pattern may be a symbol-level time domain pattern, or may be a slot-level time domain pattern.

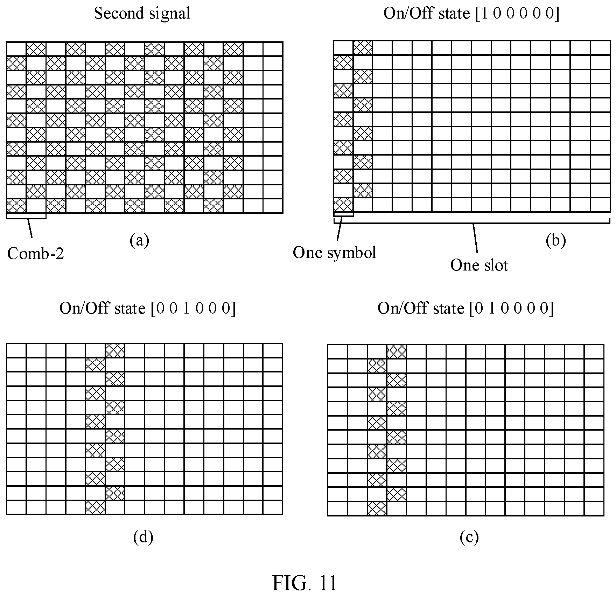

For example, FIG. 11 is a diagram in which a node reflects a received signal based on a time domain pattern. In FIG. 11, an example in which an on/off state of a PIN diode connected to a RIS unit on the first node is [1 0 0 0 0 0] and an on/off state of a PIN diode connected to a RIS unit on the second node is [0 1 0 0 0 0] is used, where "1" indicates an on state, and "0" indicates an off state. (a) in FIG. 11 shows a pattern of the second signal sent by the network device in one slot. For example, the second signal whose pattern is comb-2 is repeatedly sent. (b) in FIG. 11 shows a pattern of the first signal obtained by the first node through reflection based on the first time domain pattern. (c) in FIG. 11 shows a pattern of the first signal obtained by the second node through reflection based on the second time domain pattern. It can be learned from (b) in FIG. 11 and (c) in FIG. 11 that the first signal obtained by the first node through reflection based on the first time domain pattern and the first signal obtained by the second node through reflection based on the second time domain pattern are mutually orthogonal. Certainly, if there are more nodes, for example, the at least two nodes further include a third node, the network device may configure third time domain configuration information for the third node. The third time domain configuration information indicates a third time domain pattern. For example, an on/off state of a PIN diode connected to a RIS unit on the third node is [0 0 1 0 0 0], so that the third time domain pattern is formed. (d) in FIG. 11 shows a pattern of a first signal obtained by the third node through reflection based on the third time domain pattern. The three first signals obtained by the first node, the second node, and the third node through reflection are orthogonal pairwise. As shown in FIG. 11, a node implements signal orthogonality in one slot by controlling an on/off state of a PIN diode connected to a RIS unit. Therefore, a delay is low.

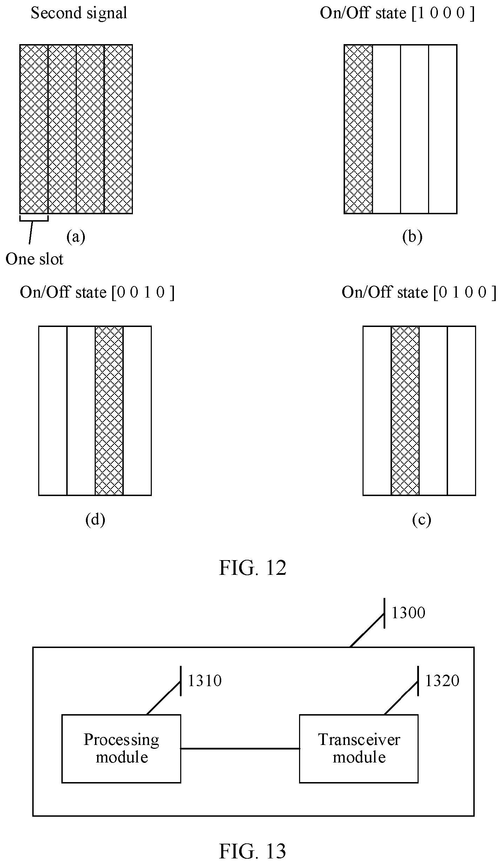

For another example, FIG. 12 is another diagram in which a node reflects a received signal based on a time domain pattern. In FIG. 12, an example in which an on/off state of a PIN diode connected to a RIS unit on the first node is [1 0 0 0] and an on/off state of a PIN diode connected to a RIS unit on the second node is [0 1 0 0] is used, where "1" indicates an on state, and "0" indicates an off state. (a) in FIG. 12 shows a pattern of the second signal sent by the network device in four consecutive slots. (b) in FIG. 12 shows a pattern of the first signal obtained by the first node by reflecting the second signal based on the first time domain pattern. (c) in FIG. 12 shows a pattern of the first signal obtained by the second node through reflection based on the second time domain pattern. It can be learned from (b) in FIG. 12 and (c) in FIG. 10 that the first signal obtained by the first node through reflection based on the first time domain pattern and the first signal obtained by the second node through reflection based on the second time domain pattern are mutually orthogonal. Certainly, if there are more nodes, for example, the at least two nodes further include a third node, the network device may configure third time domain configuration information for the third node. The third time domain configuration information indicates a third time domain pattern. For example, an on/off state of a PIN diode connected to a RIS unit on the third node is [0 0 1 0], so that the third time domain pattern is formed. (d) in FIG. 12 shows a pattern of a first signal obtained by the third node through reflection based on the third time domain pattern. The three first signals obtained by the first node, the second node, and the third node through reflection are orthogonal pairwise. As shown in FIG. 12, a node implements signal orthogonality between slots by controlling an on/off state of a PIN diode connected to a RIS unit. Therefore, complexity of signal processing by the node is low.

Implementation form 3: The first set of configuration information includes first frequency domain configuration information, and the second set of configuration information includes second frequency domain configuration information, so that the first signal obtained by the first node by reflecting the second signal and the first signal obtained by the second node by reflecting the second signal are mutually orthogonal in frequency domain. The first frequency domain configuration information may indicate a first frequency domain resource occupied by the first signal obtained by the first node through reflection. The second frequency domain configuration information may indicate a second frequency domain resource occupied by the first signal obtained by the second node through reflection. The first frequency domain resource is different from the second frequency domain resource. Optionally, the first frequency domain resource is orthogonal to the second frequency domain resource. Different nodes selectively reflect received signals in corresponding frequency domain ranges based on configured frequency domain resources. For example, a frequency domain resource occupied by a received signal is [F1, F2], a frequency domain resource occupied by a signal obtained by the first node through reflection is [F1, F3], and a frequency domain resource occupied by a signal obtained by the second node through reflection is [F4, F2], where F3<=F4. Therefore, for a receive end, the first signal obtained by the first node through reflection and the first signal obtained by the second node through reflection may be distinguished from the at least two received first signals based on the first frequency domain configuration information and the second frequency domain configuration information.

A plurality of implementation forms in the foregoing implementation form 1 to implementation form 3 may be combined to improve a network capacity. For example, the implementation form 1 and the implementation form 2 may be combined. To be specific, the first set of configuration information includes configuration information of a first OCC and first time domain configuration information, and the second set of configuration information includes configuration information of a second OCC and second time domain configuration information. For the implementation form 3, refer to related content in the foregoing implementation form 1 and implementation form 2. Details are not described herein again.

In this embodiment of this application, the configuration information for the at least two nodes may be configured (or determined) by the access network device, or may be configured (or determined) by the positioning management device. In a possible implementation, after determining the configuration information for the at least two nodes, the positioning management device sends the configuration information for the at least two nodes to the access network device. The at least two nodes process the received signals based on the respective configuration information. Considering that distances between the at least two nodes and the access network device may be different, a signal sent by the access network device may arrive at different nodes at different time, and therefore, sending time of the first signals obtained through reflection may also be different. To ensure as much as possible that first signals obtained by the plurality of nodes through reflection are mutually orthogonal, effective time of the configuration information for the nodes may be indicated, to ensure that the configuration information for the nodes is effective at the same time. In other words, it is specified that start time of using the configuration information configured for the nodes is the same.

For example, the first set of configuration information for the first node may further include first time information, and the second set of configuration information for the second node may further include second time information. The first time information indicates start time of using the first set of configuration information, and the second time information indicates start time of using the second set of configuration information. The time indicated by the first time information is the same as the time indicated by the second time information. For another example, the network device may broadcast one or more pieces of time information, where the one or more pieces of time information may be the same or different, and indicate effective time of configuration information configured for each node. The effective time of the configuration information may be absolute time or relative time. The first time information is used as an example. The first time information may be universal time (universal time coordinated, UTC), a frame number, a slot number, or a slot number and a symbol. Alternatively, the first time information may be a time offset relative to reference time.

S703: The network device sends the configuration information for the at least two nodes.

The network device determines the configuration information for the at least two nodes, and may configure the respective configuration information for each node. The network device may separately dynamically configure the respective configuration information for the at least two nodes, or may separately configure the respective configuration information for the at least two nodes in a semi-static manner. For different network devices, respective configuration information separately configured by the network devices for the at least two nodes is also different.

For example, the network device is the positioning management device, and configures the respective configuration information for each node in a dynamic configuration manner. S703a may be performed, or perform S703b and S703c may be performed. In other words, S703 is S703a, or S703 is S703b and S703c.

S703a: The positioning management device sends the configuration information for the at least two nodes.

For example, the positioning management device may send the first set of configuration information to the first node. For example, the first set of configuration information may be carried in an LPP message. Similarly, the positioning management device may also send the second set of configuration information to the second node by using the LPP message.

S703b: The positioning management device sends the configuration information for the at least two nodes to the access network device.

S703c: The access network device sends the configuration information to the at least two nodes.

For example, the access network device may send the first set of configuration information to the first node by using a first RRC message, and send the second set of configuration information to the second node by using a second RRC message. For another example, the access network device may send the configuration information for the at least two nodes to the terminal device by using a broadcast message. The broadcast message is, for example, a SIB or a posSIB.

For another example, the network device is the access network device, and configures the respective configuration information for each node in a dynamic configuration manner. S703c may be performed. That is, S703 is S703c.

Separately configuring the respective configuration information for the at least two nodes in the semi-static manner means that a plurality of sets of configuration information may be (pre)configured, and one or more sets of configuration information in the plurality of sets of configuration information are activated by using signaling.

For example, the network device is the positioning management device or the access network device, and configures the respective configuration information for each node in a semi-static configuration manner. S703d may be performed. That is, S703 is S703d.

S703d: The network device sends first indication information to the at least two nodes, where the first indication information is used to activate one of the plurality of sets of configuration information.

For example, the network device sends the first indication information to the first node, where the first indication information is used to activate the first set of configuration information in the plurality of sets of configuration information. The network device sends the first indication information to the second node, where the first indication information is used to activate the second set of configuration information in the plurality of sets of configuration information. The first indication information may be downlink control information (downlink control information, DCI), a media access control (media access control, MAC) control element (control element, CE), or RRC signaling.

It may be understood that for the three steps of S703 shown by dashed lines in FIG. 7, one or more steps shown in dashed-line boxes may be selected to be performed. This is not limited in this embodiment of this application.

Each node receives the configuration information, and processes a received signal based on the configuration information. For example, the first set of configuration information for the first node includes the configuration information of the first OCC and the first time information, and the second set of configuration information for the second node includes the configuration information of the second OCC and the second time information. The first node reflects, based on the first OCC, the received second signal at the time indicated by the first time information. The second node reflects, based on the second OCC, the received second signal at the time indicated by the second time information.

In summary, after S702 is performed, S703a may be performed, or after S702 is performed, S703b and S703c may be performed, or after S702 is performed, S703c may be performed, or after S702 is performed, S703d may be performed.

S704: The network device sends the configuration information for the at least two nodes to the terminal device.

The network device sends the configuration information for the at least two nodes to the terminal device, so that the terminal device distinguishes, from the received at least two first signals based on the configuration information for the at least two nodes, the first signal obtained by each node through reflection.

Sending, by the network device, the configuration information for the at least two nodes to the terminal device is similar to the foregoing sending, by the network device, the configuration information for the at least two nodes. For example, the network device is the positioning management device, and the positioning management device may send the configuration information for the at least two nodes by using the LPP message. Alternatively, the positioning management device sends the configuration information for the at least two nodes to the access network device. For example, the positioning management device sends the configuration information for the at least two nodes to the access network device by using an NRPPa. Then, the access network device sends the configuration information for the at least two nodes to the terminal device by using a unicast or broadcast message. If the network device is the access network device, the access network device may send the configuration information for the at least two nodes to the terminal device by using a broadcast message or a unicast message. The broadcast message is, for example, a SIB or a posSIB. The unicast message is, for example, RRC signaling. Alternatively, the network device may send the configuration information for the at least two nodes to the terminal device in the semi-static manner. For example, the network device sends the first indication information to the terminal device, where the first indication information indicates that at least two sets of configuration information in the plurality of sets of (pre)configured configuration information are activated, the at least two sets of configuration information are used for the at least two nodes, and the at least two sets of configuration information are in one-to-one correspondence to the at least two nodes. For details, refer to the content of S703a to S703d. Details are not described herein again.

It should be noted that S704 may be performed before S703, or may be performed after S704. For example, after S703a is performed, S704 may be performed; or after S703b and S703c are performed, S704 may be performed; or after S703c is performed, S704 may be performed; or after S703d is performed, S704 may be performed. For another example, after S704 is performed, S703a may be performed; or after S704 is performed, S703b and S703c may be performed; or after S704 is performed, S703c may be performed; or after S704 is performed, S703d may be performed.

Optionally, the terminal device determines an association relationship between the configuration information for the at least two nodes and the at least two nodes, that is, determines which set of configuration information is for which node. In this embodiment of this application, the network device may notify the terminal device of the association relationship between the configuration information for the at least two nodes and the at least two nodes. For example, the configuration information for the at least two nodes may further include first information, and the first information may indicate the association relationship between the configuration information for the at least two nodes and the at least two nodes. The first information may be included in any set of configuration information in the configuration information for the at least two nodes, or the first information may be independent of the configuration information for each node. Certainly, the first information may alternatively be separately sent by the network device to the terminal device. Alternatively, the first information may be preconfigured. In this case, the terminal device only needs to read the preconfigured first information.

There are a plurality of implementation forms in which the first information indicates the association relationship between the configuration information for the at least two nodes and the at least two nodes, for example, including but not limited to the following several implementation forms. A specific implementation form to be used is not limited in this embodiment of this application.

Implementation form 1: The first information indicates an association relationship between the configuration information for the at least two nodes and configuration information for the second signal. It is considered that the terminal device does not know each deployed node, that is, the terminal device does not sense the node. In this case, the association relationship between the configuration information for the second signal and the configuration information for the at least two nodes may indirectly represent the association relationship between the configuration information for the at least two nodes and the at least two nodes. It may be understood that the configuration information for the second signal may be sent or activated by the network device to the terminal device. Therefore, the terminal device may determine the configuration information for each node in the configuration information for the at least two nodes based on the first information and the configuration information for the second signal. An association relationship between the configuration information for the at least two nodes and the positioning reference signal is configured, so that the terminal device can determine a correspondence between the configuration information for the at least two nodes and the at least two nodes without sensing existence of the nodes. In this way, leakage of node information (for example, identification information and location information) in the network can be reduced, and network security can be improved.

Implementation form 2: The first information indicates an association relationship between the configuration information for the at least two nodes and identification information of the at least two nodes. The identification information of the node may be an ID of the node, and the ID may uniquely identify the node. Alternatively, the identification information of the node may be information that is agreed between the terminal device and the node and that identifies the node, for example, a virtual ID. The virtual ID may be an ID that uniquely identifies the node, or may be another ID. In this form, the terminal device may determine the configuration information for each node in the configuration information for the at least two nodes based on the identification information of the at least two nodes and the first information.

Implementation form 3: The first information may indicate an association relationship between the configuration information for the at least two nodes and location information of the at least two nodes. For example, in a UE-based positioning scenario, the first information indicates the association relationship between the configuration information for the at least two nodes and the location information of the at least two nodes, so that the terminal device can determine the configuration information for each node based on the location information of the at least two nodes. For example, in a possible implementation, the network device may send the location information of the at least two nodes to the terminal device.

S705: The terminal device measures the at least two first signals based on the configuration information for the at least two nodes.

The terminal device may determine, from the at least two first signals based on the configuration information for the at least two nodes, the first signal obtained by each node through reflection. Therefore, the terminal device may measure the at least two first signals to obtain at least two measurement results.

After obtaining the at least two measurement results, the terminal device may determine a location of the terminal device with reference to the location information of the at least two nodes. In other words, the terminal device may determine the location of the terminal device according to a downlink positioning method. Optionally, the terminal device may report the at least two measurement results to the network device, so that the network device may determine the location of the terminal device according to an uplink positioning method. For example, the terminal device may perform S706. It should be noted that the terminal device reports the at least two measurement results to the network device is not subject to whether the terminal device determines the location of the terminal device based on the at least two measurement results. In other words, even if the terminal device determines the location of the terminal device based on the at least two measurement results, the terminal device may still report the at least two measurement results to the network device. For example, the at least two measurement results may be for other purposes such as calculation or determining of positioning integrity (Positioning integrity), and beam management.

S706: The terminal device sends the at least two measurement results to the network device.

The terminal device sends the at least two measurement results to the network device. It may be understood that the at least two measurement results are in one-to-one correspondence to the at least two nodes. For example, the terminal device may send the at least two measurement results to the positioning management device, for example, S706a. In other words, S706 may be S706a. For example, the terminal device may first send the at least two measurement results to the access network device, and the access network device receives the at least two measurement results, and sends the at least two measurement results to the positioning management device, for example, S706b and S706c. In other words, S706 may be S706b and S706c. Alternatively, the terminal device may directly send the at least two measurement results to the access network device, for example, S706d. In other words, S706 may be S706d. The access network device receives the at least two measurement results sent by the terminal device, and may perform beam management, location calculation, determining of positioning integrity, or the like. When calculating the location of the terminal device, the network device needs to determine a measurement result corresponding to each node in the at least two measurement results.

It may be understood that for the three steps of S706 shown by dashed lines in FIG. 7, one or more steps shown in dashed-line boxes may be selected to be performed. This is not limited in this embodiment of this application.

In a possible implementation, the terminal device sends second information to the network device, where the second information indicates an association relationship between the at least two measurement results and the at least two nodes. The terminal device may send the at least two measurement results and the second information together to the network device, or may separately send the at least two measurement results and the second information to the network device. In other words, the at least two measurement results and the second information may be carried in one piece of signaling, or may be separately carried in one piece of signaling.

For example, the second information may indicate an association relationship between the at least two measurement results and the identification information of the at least two nodes. The network device may determine, based on identification information of each node and the second information, the measurement result corresponding to each node in the at least two measurement results.

For example, the second information may indicate an association relationship between the at least two measurement results and the configuration information for the second signal. The network device may determine, based on the configuration information for the second signal and the second information, the measurement result corresponding to each node in the at least two measurement results.

For example, the second information may indicate an association relationship between the at least two measurement results and the location information of the at least two nodes. The network device may determine, based on the location information of the at least two nodes and the second information, the measurement result corresponding to each node in the at least two measurement results.

The network device may determine the location of the terminal device based on the at least two measurement results and according to the uplink positioning method. Certainly, the network device may also control reflection power of the node or perform beam management based on the at least two measurement results. For example, the access network device may adjust reflection power of each node based on the at least two measurement results.

In a scenario in which a reflector is used, an embodiment of this application provides a method with which a receive end can distinguish between signals obtained by reflectors through reflection. For example, different orthogonal sequences or reflection delays or time domain patterns are configured for the reflectors, so that the signals obtained by the reflectors through reflection are mutually orthogonal, and the signals obtained by the reflectors through reflection are distinguished by using configuration information for the reflectors. Compared with current beam-based distinguishing between the signals obtained by the reflectors through reflection, this method is applicable to more scenarios. For example, the method may be applied to a scenario in which there is no beam technology. In addition, signals sent by using a same beam can be distinguished, and distinguishing accuracy is improved.

It should be noted that the procedure shown in FIG. 7 is performed by, for example, the network device, the nodes, and the terminal device. In a possible scenario, the communication method provided in this embodiment of this application may also be applied to a sidelink. A difference from the procedure shown in FIG. 7 lies in that in the sidelink, terminal devices interact by using a PC5 message. Optionally, at least one of a plurality of terminal devices communicating on the sidelink has a same role as the network device in this embodiment of this application, and the terminal device may perform a behavior of the network device in this embodiment of this application. In addition, the node interacts with the terminal device by using a PC5 message. For example, the node may send configuration information for the node to the terminal device by using the PC5 message.

In the foregoing embodiments provided in this application, the method provided in embodiments of this application is described from a perspective of interaction between the terminal device and the network device. To implement functions in the method provided in embodiments of this application, the network device and the terminal device may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

The following describes, with reference to the accompanying drawings, a communication apparatus, in embodiments of this application, configured to implement the foregoing method. Therefore, all the foregoing content may be used in the following embodiments. Repeated content is not described again.

FIG. 13 is a schematic block diagram of a communication apparatus 1300 according to an embodiment of this application. The communication apparatus 1300 may include a processing module 1310 and a transceiver module 1320. Optionally, a storage unit may be further included. The storage unit may be configured to store instructions (code or a program) and/or data. The processing module 1310 and the transceiver module 1320 may be coupled to the storage unit. For example, the processing module 1310 may read the instructions (the code or the program) and/or the data in the storage unit, to implement a corresponding method. The modules may be disposed independently, or some or all of the modules may be integrated.

In some possible implementations, the communication apparatus 1300 can correspondingly implement a behavior and a function of the terminal device in the foregoing method embodiment. The communication apparatus 1300 may be the terminal device, or may be a component (for example, a chip or a circuit) used in the terminal device, or may be a chip or a chip set in the terminal device, or a part of a chip that is configured to perform a related method function.

For example, the transceiver module 1320 is configured to receive at least two first signals obtained by at least two nodes through reflection, where the at least two first signals are mutually orthogonal. The processing module 1310 is configured to measure the at least two first signals based on configuration information for the at least two nodes.

In an optional implementation, the configuration information for the at least two nodes includes configuration information of at least two orthogonal sequences. Alternatively, the configuration information for the at least two nodes includes at least two pieces of time domain configuration information. Alternatively, the configuration information for the at least two nodes includes configuration information of at least two orthogonal sequences and at least two pieces of time domain configuration information.

In an optional implementation, the at least two nodes include a first node and a second node, and the at least two pieces of time domain configuration information include first time domain configuration information for the first node and second time domain configuration information for the second node. The first time domain configuration information indicates first duration, the second time domain configuration information indicates second duration, and the first duration is different from the second duration. Alternatively, the first time domain configuration information indicates a first time domain pattern, the second time domain configuration information indicates a second time domain pattern, and the first time domain pattern is different from the second time domain pattern.

In an optional implementation, the first time domain pattern indicates a first time domain resource occupied by a first signal obtained by the first node through reflection. The second time domain pattern indicates a second time domain resource occupied by a first signal obtained by the second node through reflection. The first time domain resource is different from the second time domain resource.

In an optional implementation, the at least two orthogonal sequences include a first sequence, the first sequence includes M elements, and M is a positive integer. The M elements correspond to N symbols, the N symbols are located in one slot or a plurality of consecutive slots, and N is an integer greater than or equal to 1. Alternatively, the M elements correspond to L slots, and L is a positive integer.

In an optional implementation, the first duration is less than or equal to one slot, or the first duration is greater than one slot.

In an optional implementation, the configuration information for the at least two nodes includes first information, and the first information indicates an association relationship between the configuration information for the at least two nodes and the at least two nodes.

In an optional implementation, that the first information indicates the association relationship between the configuration information for the at least two nodes and the at least two nodes includes:
the first information indicates an association relationship between the configuration information for the at least two nodes and identification information of the at least two nodes; or the first information indicates an association relationship between the configuration information for the at least two nodes and configuration information for a second signal, and one first signal is obtained by one node by reflecting the second signal.

In an optional implementation, the transceiver module 1320 is further configured to receive first indication information, where the first indication information is used to activate one or more of at least two sets of configuration information.

In an optional implementation, the transceiver module 1320 is further configured to receive the configuration information for the at least two nodes, where the configuration information for the at least two nodes is carried in an RRC message or an LPP message.

In an optional implementation, the transceiver module 1320 is further configured to receive the location information of the at least two nodes.

In an optional implementation, the communication apparatus 1300 measures the at least two first signals based on the configuration information for the at least two nodes, to obtain at least two measurement results. The transceiver module 1320 is further configured to send the at least two measurement results, where the at least two measurement results are in one-to-one correspondence to the at least two nodes.

In some possible implementations, the communication apparatus 1300 can correspondingly implement a behavior and a function of the node in the foregoing method embodiment. The communication apparatus 1300 may be the node, or may be a component (for example, a chip or a circuit) used in the node, or may be a chip or a chip set in the node, or a part of a chip that is configured to perform a related method function.

For example, the processing module 1310 may be configured to: determine a first set of configuration information, where the first set of configuration information includes configuration information of a first sequence and/or first time domain configuration information, and reflect a received signal based on the first set of configuration information.

In an optional implementation, the first time domain configuration information indicates first duration, or the first time domain configuration information indicates a first time domain pattern.

In an optional implementation, the first sequence includes M elements, and M is a positive integer. The M elements correspond to N symbols, the N symbols are located in one slot or a plurality of consecutive slots, and N is a positive integer. Alternatively, the M elements correspond to L slots, and L is a positive integer.

In an optional implementation, the first duration is less than or equal to one slot, or the first duration is greater than one slot.

In an optional implementation, the first set of configuration information includes first time information, and the first time information indicates effective time of the first set of configuration information.

In an optional implementation, the transceiver module 1320 is configured to receive the first set of configuration information. Alternatively, the transceiver module 1320 is configured to receive first indication information, where the first indication information is used to activate the first set of configuration information in a plurality of sets of configuration information.

In an optional implementation, the transceiver module 1320 is further configured to send information about the communication apparatus 1300 to a network device, where the information about the communication apparatus 1300 includes identification information of the communication apparatus 1300 and location information of the communication apparatus 1300.

In some possible implementations, the communication apparatus 1300 can correspondingly implement a behavior and a function of the network device in the foregoing method embodiment. The communication apparatus 1300 may be the network device, or may be a component (for example, a chip or a circuit) used in the network device, or may be a chip or a chip set in the network device, or a part of a chip that is configured to perform a related method function.

For example, the transceiver module 1320 is configured to send or activate a first set of configuration information for a first node and a second set of configuration information for a second node, where the first set of configuration information includes configuration information of a first sequence, the second set of configuration information includes configuration information of a second sequence, and the first sequence is orthogonal to the second sequence. Alternatively, the first set of configuration information includes first time domain configuration information, and the second set of configuration information includes second time domain configuration information. Alternatively, the first set of configuration information includes configuration information of a first sequence and first time domain configuration information, the second set of configuration information includes configuration information of a second sequence and second time domain configuration information, and the first sequence is orthogonal to the second sequence.

In an optional implementation, the first time domain configuration information indicates first duration, the second time domain configuration information indicates second duration, and the first duration is different from the second duration. Alternatively, the first time domain configuration information indicates a first time domain pattern, the second time domain configuration information indicates a second time domain pattern, and the first time domain pattern is different from the second time domain pattern.

In an optional implementation, the first sequence is a sequence including M elements, and M is a positive integer. The M elements correspond to N symbols, the N symbols are located in one slot or a plurality of consecutive slots, and N is a positive integer. Alternatively, the M elements correspond to L slots, and L is a positive integer.

In an optional implementation, the first duration is less than or equal to one slot, or the first duration is greater than one slot.

In an optional implementation, the first set of configuration information includes first time information, the second set of configuration information includes second time information, the first time information indicates effective time of the first set of configuration information, and the second time information indicates effective time of the second set of configuration information.

In an optional implementation, the transceiver module 1320 is further configured to send first information, where the first information indicates an association relationship between the first set of configuration information, the second set of configuration information, and the at least two nodes]

In a possible implementation, that the first information indicates the association relationship between the first set of configuration information, the second set of configuration information, and the at least two nodes includes: The first information indicates an association relationship between the first set of configuration information, the second set of configuration information, and identification information of the at least two nodes. Alternatively, the first information indicates an association relationship between the first set of configuration information, the second set of configuration information, and configuration information for a second signal from the network device.

In a possible implementation, that the transceiver module 1320 is configured to send the first set of configuration information includes: The transceiver module 1320 is configured to send first indication information, where the first indication information is used to activate the first set of configuration information in a plurality of sets of configuration information.

In a possible implementation, the transceiver module 1320 is further configured to obtain information about the at least two nodes.

In a possible implementation, the communication apparatus 1300 is a positioning management device. That the transceiver module 1320 obtains the information about the at least two nodes includes: The transceiver module 1320 receives the information about the at least two nodes sent by an access network device. Alternatively, the transceiver module 1320 receives information separately sent by the at least two nodes.

It should be understood that in this embodiment of this application, the processing module 1310 may be implemented by a processor or a processor-related circuit component, and the transceiver module 1320 may be implemented by a transceiver, a transceiver-related circuit component, or a communication interface.

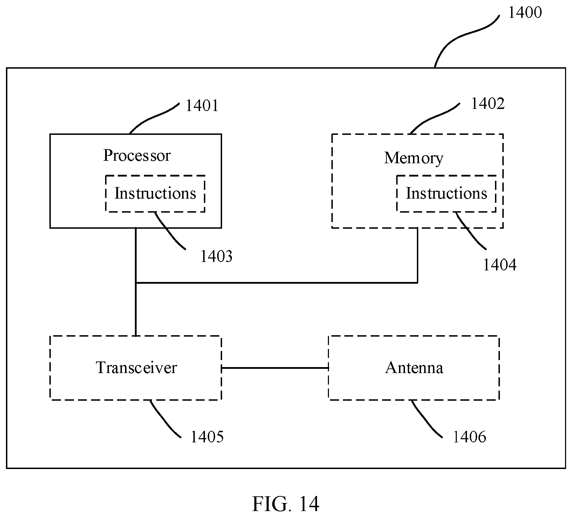

FIG. 14 is a schematic block diagram of a communication apparatus 1400 according to an embodiment of this application. The communication apparatus 1400 may be a terminal device, and can implement a function of the terminal device in the method provided in embodiments of this application. Alternatively, the communication apparatus 1400 may be an apparatus that can support a terminal device in implementing a corresponding function in the method provided in embodiments of this application. The communication apparatus 1400 may be a chip system. In this embodiment of this application, the chip system may include a chip, or may include a chip and another discrete component. For a specific function, refer to the descriptions in the foregoing method embodiment. Alternatively, the communication apparatus 1400 may be a network device, and can implement a function of the network device in the method provided in embodiments of this application. Alternatively, the communication apparatus 1400 may be an apparatus that can support a network device in implementing a corresponding function in the method provided in embodiments of this application. The communication apparatus 1400 may be a chip system. In this embodiment of this application, the chip system may include a chip, or may include a chip and another discrete component. For a specific function, refer to the descriptions in the foregoing method embodiment.

The communication apparatus 1400 includes one or more processors 1401 that may be configured to implement or support the communication apparatus 1400 in implementing a function of the terminal device in the method provided in embodiments of this application. For details, refer to the detailed descriptions in the method example. Details are not described herein again. The one or more processors 1401 may alternatively be configured to implement or support the communication apparatus 1400 in implementing a function of the network device in the method provided in embodiments of this application. For details, refer to the detailed descriptions in the method example. Details are not described herein again. The processor 1401 may also be referred to as a processing unit or a processing module, and may implement a specific control function. The processor 1401 may be a general-purpose processor, a special-purpose processor, or the like, for example, includes a central processing unit, an application processor, a modem processor, a graphics processing unit, an image signal processor, a digital signal processor, a video codec processor, a controller, a memory, and/or a neural network processor. The central processing unit may be configured to control the communication apparatus 1400, execute a software program, and/or process data. Different processors may be independent components, or may be integrated into one or more processors, for example, integrated into one or more application-specific integrated circuits.

Optionally, the communication apparatus 1400 includes one or more memories 1402, configured to store instructions 1404. The instructions may be run on the processor 1401, so that the communication apparatus 1400 performs the method described in the foregoing method embodiment. The memory 1402 and the processor 1401 may be separately disposed, or may be integrated together, or it may be considered that the memory 1402 is coupled to the processor 1401. The coupling in this embodiment of this application may be an indirect coupling or a communication connection between apparatuses, units, or modules in an electrical form, a mechanical form, or another form, and is used for information exchange between the apparatuses, the units, or the modules. The processor 1401 may collaboratively operate with the memory 1402. At least one memory in the at least one memory may be included in the processor. It should be noted that the memory 1402 is not mandatory, and therefore is shown by using a dashed line in FIG. 14.

Optionally, the memory 1402 may further store data. The processor and the memory may be separately disposed, or may be integrated together. In this embodiment of this application, the memory 1402 may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. The memory in this embodiment of this application may alternatively be a circuit or any other apparatus that can implement a storage function, and is configured to store the program instructions and/or the data.

Optionally, the communication apparatus 1400 may include instructions 1403 (which may also be referred to as code or programs sometimes). The instructions 1403 may be run on the processor, so that the communication apparatus 1400 performs the method described in the foregoing embodiment. The processor 1401 may store data.

Optionally, the communication apparatus 1400 may further include a transceiver 1405 and an antenna 1406. The transceiver 1405 may be referred to as a transceiver unit, a transceiver module, a transceiver machine, a transceiver circuit, a transceiver, an input/output interface, or the like, and is configured to implement a receiving and sending function of the communication apparatus 1400 via the antenna 1406.

The processor 1401 and the transceiver 1405 described in this application may be implemented on an integrated circuit (integrated circuit, IC), an analog IC, a radio frequency integrated circuit (radio frequency identification, RFID), a mixed signal IC, an application-specific integrated chip (application-specific integrated circuit, ASIC), a printed circuit board (printed circuit board, PCB), an electronic device, or the like. The communication apparatus described in this specification may be implemented by an independent device (for example, an independent integrated circuit or a mobile phone), or may be a part of a large device (for example, a module that may be embedded in another device). For details, refer to the foregoing descriptions about the terminal device and the network device. Details are not described herein again.

Optionally, the communication apparatus 1400 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that in some embodiments, the communication apparatus 1400 may include more or fewer components, or some components are integrated, or some components are split. The components may be implemented by hardware, software, or a combination of software and hardware.

It should be noted that the communication apparatus in the foregoing embodiments may be a terminal device (or a network device), a circuit, a chip used in a terminal device (or a network device), or another combined component or component that has a function of the terminal device (or the network device), or the like. When the communication apparatus is the terminal device (or the network device), the transceiver module may be a transceiver, and may include an antenna, a radio frequency circuit, and the like; and the processing module may be a processor, for example, a central processing module (central processing unit, CPU). When the communication apparatus is the component having the function of the terminal device (or the network device), the transceiver module may be a radio frequency unit, and the processing module may be a processor. When the communication apparatus is the chip system, the communication apparatus may be a field programmable gate array (field programmable gate array, FPGA), an ASIC, a system on chip (system on chip, SoC), a CPU, a network processor (network processor, NP), a digital signal processing circuit (digital signal processor, DSP), a micro controller unit (micro controller unit, MCU), a programmable controller (programmable logic device, PLD), or another integrated chip; and the processing module may be a processor of the chip system. The transceiver module or a communication interface may be an input/output interface or an interface circuit of the chip system. For example, the interface circuit may be a code/data read/write interface circuit. The interface circuit may be configured to: receive code instructions (where the code instructions are stored in the memory, and may be directly read from the memory, or may be read from the memory via another component), and transmit the code instructions to the processor. The processor may be configured to run the code instructions to perform the method in the foregoing method embodiment. For another example, the interface circuit may be a signal transmission interface circuit between a communication processor and the transceiver machine.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. Specifically, the communication system includes at least one terminal device, at least one network device, and at least one node. For example, the communication system includes a terminal device and a node that are configured to implement related functions in FIG. 7. For example, the communication system includes a first node and a second node. The first node is configured to: determine a first set of configuration information, and reflect a received second signal based on the first set of configuration information. The second node is configured to: determine a second set of configuration information, and reflect a received second signal based on the second set of configuration information. A first signal obtained by the first node by reflecting the second signal is orthogonal to a first signal obtained by the second node by reflecting the second signal.

In an optional implementation, the first set of configuration information includes configuration information of a first sequence, the second set of configuration information includes configuration information of a second sequence, and the first sequence is orthogonal to the second sequence. Alternatively, the first set of configuration information includes first time domain configuration information, and the second set of configuration information includes second time domain configuration information. Alternatively, the first set of configuration information includes configuration information of a first sequence and first time domain configuration information, the second set of configuration information includes configuration information of a second sequence and second time domain configuration information, and the first sequence is orthogonal to the second sequence.

In an optional implementation, the first time domain configuration information indicates first duration, the second time domain configuration information indicates second duration, and the first duration is different from the second duration. Alternatively, the first time domain configuration information indicates a first time domain pattern, the second time domain configuration information indicates a second time domain pattern, and the first time domain pattern is different from the second time domain pattern.

In an optional implementation, the communication system further includes a network device, configured to send or activate the first set of configuration information and the second set of configuration information. For details, refer to the related descriptions in the method embodiment. The details are not described herein again.

An embodiment of this application further provides a computer-readable storage medium, including instructions. When the instructions are run on a computer, the computer is enabled to perform the method performed by the terminal device, the network device, or the node in FIG. 7.

An embodiment of this application further provides a computer program product, including instructions. When the instructions are run on a computer, the computer is enabled to perform the method performed by the terminal device, the network device, or the node in FIG. 7.

An embodiment of this application provides a chip system. The chip system includes a processor, may further include a memory, and is configured to implement a function of the terminal device in the foregoing method, or is configured to implement a function of the network device in the foregoing method. The chip system may include a chip, or may include a chip and another discrete component.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that each illustrative logical block (illustrative logical block) and step (step) described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatus, and unit, reference may be made to a corresponding process in the foregoing method embodiment, and details are not described again herein.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in an electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in a form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the method in embodiments of this application. The foregoing storage medium includes any medium, for example, a USB flash drive, a removable hard disk, a read-only memory (read-only memory, ROM), a RAM, a magnetic disk, or an optical disc, that can store program code.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
receiving, by a terminal device, at least two first signals obtained by at least two nodes through reflection, wherein the at least two first signals are mutually orthogonal; and
measuring, by the terminal device, the at least two first signals based on configuration information for the at least two nodes.

2. The method according to claim 1, wherein the configuration information for the at least two nodes comprises configuration information of at least two orthogonal sequences; or
the configuration information for the at least two nodes comprises at least two pieces of time domain configuration information; or
the configuration information for the at least two nodes comprises configuration information of at least two orthogonal sequences and at least two pieces of time domain configuration information.

3. The method according to claim 2, wherein the at least two nodes comprise a first node and a second node, and the at least two pieces of time domain configuration information comprise first time domain configuration information for the first node and second time domain configuration information for the second node; and
the first time domain configuration information indicates first duration, the second time domain configuration information indicates second duration, and the first duration is different from the second duration; or
the first time domain configuration information indicates a first time domain pattern, the second time domain configuration information indicates a second time domain pattern, and the first time domain pattern is different from the second time domain pattern.

4. The method according to claim 2, wherein
the first time domain pattern indicates a first time domain resource occupied by a first signal obtained by the first node through reflection, the second time domain pattern indicates a second time domain resource occupied by a first signal obtained by the second node through reflection, and the first time domain resource is different from the second time domain resource.

5. The method according to claim 2, wherein the at least two orthogonal sequences comprise a first sequence, the first sequence comprises M elements, and M is a positive integer; and
the M elements correspond to N symbols, the N symbols are located in one slot or a plurality of consecutive slots, and N is a positive integer; or
the M elements correspond to L slots, and L is a positive integer.

6. The method according to claim 3, wherein the first duration is less than or equal to one slot, or the first duration is greater than one slot.

7. The method according to any one of claims 1 to 6, wherein the configuration information for the at least two nodes comprises first information, and the first information indicates an association relationship between configurations for the at least two nodes and the at least two nodes.

8. The method according to claim 7, wherein that the first information indicates an association relationship between the configuration information for the at least two nodes and the at least two nodes comprises:
the first information indicates an association relationship between the configuration information for the at least two nodes and identification information of the at least two nodes; or
the first information indicates an association relationship between the configuration information for the at least two nodes and configuration information for a second signal, and one first signal is obtained by one node by reflecting the second signal.

9. The method according to any one of claims 1 to 8, wherein the method further comprises:
receiving, by the terminal device, first indication information, wherein the first indication information is used to activate one or more of at least two sets of configuration information.

10. The method according to any one of claims 1 to 8, wherein the method further comprises:
receiving, by the terminal device, the configuration information for the at least two nodes, wherein the configuration information for the at least two nodes is carried in a radio resource control RRC message or a positioning protocol interface message.

11. The method according to any one of claims 1 to 10, wherein the method further comprises:
receiving, by the terminal device, location information of the at least two nodes.

12. The method according to any one of claims 1 to 10, wherein the terminal device measures the at least two first signals based on the configuration information for the at least two nodes, to obtain at least two measurement results, and the method further comprises:
sending, by the terminal device, the at least two measurement results, wherein the at least two measurement results are in one-to-one correspondence to the at least two nodes.

13. A communication method, comprising:
determining, by a first node, a first set of configuration information, wherein the first set of configuration information comprises configuration information of a first sequence and/or first time domain configuration information; and
reflecting, by the first node, a received signal based on the first set of configuration information.

14. The method according to claim 13, wherein the first time domain configuration information indicates first duration, or the first time domain configuration information indicates a first time domain pattern.

15. The method according to claim 13 or 14, wherein the first sequence comprises M elements, and M is a positive integer; and the M elements correspond to N symbols, the N symbols are located in one slot or a plurality of consecutive slots, and N is an integer greater than or equal to 1; or the M elements correspond to L slots, and L is a positive integer.

16. The method according to claim 13 or 14, wherein the first duration is less than or equal to one slot, or the first duration is greater than one slot.

17. The method according to any one of claims 13 to 16, wherein the first set of configuration information comprises first time information, and the first time information indicates effective time of the first set of configuration information.

18. The method according to any one of claims 13 to 17, wherein the method further comprises:
receiving, by the first node, the first set of configuration information; or
receiving, by the first node, first indication information, wherein the first indication information is used to activate the first set of configuration information in a plurality of sets of configuration information.

19. A communication method, comprising:
sending or activating, by the network device, a first set of configuration information for a first node and a second set of configuration information for a second node, wherein
the first set of configuration information comprises configuration information of a first sequence, the second set of configuration information comprises configuration information of a second sequence, and the first sequence is orthogonal to the second sequence; or
the first set of configuration information comprises first time domain configuration information, and the second set of configuration information comprises second time domain configuration information; or
the first set of configuration information comprises configuration information of a first sequence and first time domain configuration information, the second set of configuration information comprises configuration information of a second sequence and second time domain configuration information, and the first sequence is orthogonal to the second sequence.

20. The method according to claim 19, wherein the first time domain configuration information indicates first duration, the second time domain configuration information indicates second duration, and the first duration is different from the second duration; or
the first time domain configuration information indicates a first time domain pattern, the second time domain configuration information indicates a second time domain pattern, and the first time domain pattern is different from the second time domain pattern.

21. The method according to claim 19 or 20, wherein the first set of configuration information comprises first time information, the second set of configuration information comprises second time information, the first time information indicates effective time of the first set of configuration information, and the second time information indicates effective time of the second set of configuration information.

22. A communication system, comprising:
a first node, configured to: determine a first set of configuration information, and reflect a received second signal based on the first set of configuration information; and
a second node, configured to: determine a second set of configuration information, and reflect a received second signal based on the second set of configuration information, wherein
a first signal obtained by the first node by reflecting the second signal is orthogonal to a first signal obtained by the second node by reflecting the second signal.

23. The communication system according to claim 22, wherein the first set of configuration information comprises configuration information of a first sequence, the second set of configuration information comprises configuration information of a second sequence, and the first sequence is orthogonal to the second sequence; or
the first set of configuration information comprises first time domain configuration information, and the second set of configuration information comprises second time domain configuration information; or
the first set of configuration information comprises configuration information of a first sequence and first time domain configuration information, the second set of configuration information comprises configuration information of a second sequence and second time domain configuration information, and the first sequence is orthogonal to the second sequence.

24. The communication system according to claim 23, wherein the first time domain configuration information indicates first duration, the second time domain configuration information indicates second duration, and the first duration is different from the second duration; or
the first time domain configuration information indicates a first time domain pattern, the second time domain configuration information indicates a second time domain pattern, and the first time domain pattern is different from the second time domain pattern.

25. The communication system according to claim 24, wherein the first time domain pattern indicates a first time domain resource occupied by the first signal obtained by the first node through reflection, the second time domain pattern indicates a second time domain resource occupied by the first signal obtained by the second node through reflection, and the first time domain resource is different from the second time domain resource.

26. The communication system according to claim 23 or 24, wherein the first sequence comprises M elements, and M is a positive integer; and the M elements correspond to N symbols, the N symbols are located in one slot or a plurality of consecutive slots, and N is a positive integer; or the M elements correspond to L slots, and L is a positive integer.

27. The communication system according to claim 24, wherein the first duration is less than or equal to one slot, or the first duration is greater than one slot.

28. The communication system according to any one of claims 22 to 24, wherein the communication system further comprises:
a network device, configured to send or activate the first set of configuration information and the second set of configuration information.

29. A communication apparatus, comprising a processing module and a transceiver module, wherein
the transceiver module is configured to receive at least two first signals obtained by at least two nodes through reflection, wherein the at least two first signals are mutually orthogonal; and
the processing module is configured to measure the at least two first signals based on configuration information for the at least two nodes.

30. The apparatus according to claim 29, wherein the configuration information for the at least two nodes comprises configuration information of at least two orthogonal sequences; or
the configuration information for the at least two nodes comprises at least two pieces of time domain configuration information; or
the configuration information for the at least two nodes comprises configuration information of at least two orthogonal sequences and at least two pieces of time domain configuration information.

31. The apparatus according to claim 30, wherein the at least two nodes comprise a first node and a second node, and the at least two pieces of time domain configuration information comprise first time domain configuration information for the first node and second time domain configuration information for the second node; and
the first time domain configuration information indicates first duration, the second time domain configuration information indicates second duration, and the first duration is different from the second duration; or
the first time domain configuration information indicates a first time domain pattern, the second time domain configuration information indicates a second time domain pattern, and the first time domain pattern is different from the second time domain pattern.

32. The apparatus according to claim 30, wherein
the first time domain pattern indicates a first time domain resource occupied by a first signal obtained by the first node through reflection, the second time domain pattern indicates a second time domain resource occupied by a first signal obtained by the second node through reflection, and the first time domain resource is different from the second time domain resource.

33. The apparatus according to claim 30, wherein the at least two orthogonal sequences comprise a first sequence, the first sequence comprises M elements, and M is a positive integer; and
the M elements correspond to N symbols, the N symbols are located in one slot or a plurality of consecutive slots, and N is a positive integer; or
the M elements correspond to L slots, and L is a positive integer.

34. The apparatus according to claim 31, wherein the first duration is less than or equal to one slot, or the first duration is greater than one slot.

35. The apparatus according to any one of claims 29 to 34, wherein the configuration information for the at least two nodes comprises first information, and the first information indicates an association relationship between configurations for the at least two nodes and the at least two nodes.

36. The apparatus according to claim 35, wherein that the first information indicates an association relationship between the configuration information for the at least two nodes and the at least two nodes comprises:
the first information indicates an association relationship between the configuration information for the at least two nodes and identification information of the at least two nodes; or
the first information indicates an association relationship between the configuration information for the at least two nodes and configuration information for a second signal, and one first signal is obtained by one node by reflecting the second signal.

37. The apparatus according to any one of claims 29 to 36, wherein the transceiver module is further configured to:
receive first indication information, wherein the first indication information is used to activate one or more of at least two sets of configuration information.

38. The apparatus according to any one of claims 29 to 36, wherein the transceiver module is further configured to:
receive the configuration information for the at least two nodes, wherein the configuration information for the at least two nodes is carried in a radio resource control RRC message or a positioning protocol interface message.

39. The apparatus according to any one of claims 29 to 38, wherein the transceiver module is further configured to:
receive location information of the at least two nodes.

40. The apparatus according to any one of claims 29 to 38, wherein the communication apparatus measures the at least two first signals based on the configuration information for the at least two nodes, to obtain at least two measurement results, and the transceiver module is further configured to:
send the at least two measurement results, wherein the at least two measurement results are in one-to-one correspondence to the at least two nodes.

41. A communication apparatus, comprising a processing module and a transceiver module, wherein
the processing module is configured to determine a first set of configuration information, wherein the first set of configuration information comprises configuration information of a first sequence and/or first time domain configuration information; and
the transceiver module is configured to reflect a received signal based on the first set of configuration information.

42. The apparatus according to claim 41, wherein the first time domain configuration information indicates first duration, or the first time domain configuration information indicates a first time domain pattern.

43. The apparatus according to claim 41 or 42, wherein the first sequence comprises M elements, and M is a positive integer; and the M elements correspond to N symbols, the N symbols are located in one slot or a plurality of consecutive slots, and N is an integer greater than or equal to 1; or the M elements correspond to L slots, and L is a positive integer.

44. The apparatus according to claim 41 or 42, wherein the first duration is less than or equal to one slot, or the first duration is greater than one slot.

45. The apparatus according to any one of claims 41 to 44, wherein the first set of configuration information comprises first time information, and the first time information indicates effective time of the first set of configuration information.

46. The apparatus according to any one of claims 41 to 45, wherein the transceiver module is further configured to:
receive the first set of configuration information; or
receive first indication information, wherein the first indication information is used to activate the first set of configuration information in a plurality of sets of configuration information.

47. A communication apparatus, comprising:
a processing module, configured to determine a first set of configuration information for a first node and a second set of configuration information for a second node, wherein the first set of configuration information comprises configuration information of a first sequence, the second set of configuration information comprises configuration information of a second sequence, and the first sequence is orthogonal to the second sequence; or the first set of configuration information comprises first time domain configuration information, and the second set of configuration information comprises second time domain configuration information; or the first set of configuration information comprises configuration information of a first sequence and first time domain configuration information, the second set of configuration information comprises configuration information of a second sequence and second time domain configuration information, and the first sequence is orthogonal to the second sequence; and
a transceiver module, configured to send or activate the first set of configuration information and the second set of configuration information.

48. The apparatus according to claim 47, wherein the first time domain configuration information indicates first duration, the second time domain configuration information indicates second duration, and the first duration is different from the second duration; or
the first time domain configuration information indicates a first time domain pattern, the second time domain configuration information indicates a second time domain pattern, and the first time domain pattern is different from the second time domain pattern.

49. The apparatus according to claim 47 or 48, wherein the first set of configuration information comprises first time information, the second set of configuration information comprises second time information, the first time information indicates effective time of the first set of configuration information, and the second time information indicates effective time of the second set of configuration information.

50. A communication apparatus, comprising a processing module and a transceiver module, wherein
the processing module is configured to determine a first set of configuration information and a second set of configuration information;
the transceiver module is configured to send or activate the first set of configuration information and the second set of configuration information; and
the first set of configuration information comprises configuration information of a first sequence, the second set of configuration information comprises configuration information of a second sequence, and the first sequence is orthogonal to the second sequence, or
the first set of configuration information comprises first time domain configuration information, and the second set of configuration information comprises second time domain configuration information, or
the first set of configuration information comprises configuration information of a first sequence and first time domain configuration information, the second set of configuration information comprises configuration information of a second sequence and second time domain configuration information, and the first sequence is orthogonal to the second sequence.

51. A communication apparatus, comprising a processor and a communication interface, wherein the communication interface is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 21 by using a logic circuit or executing code instructions.

52. A computer-readable storage medium, wherein the computer-readable storage medium stores a computer program, and when the computer program is run, the method according to any one of claims 1 to 21 is implemented.

53. A computer program product, wherein the computer program product comprises computer program code, and when the computer program code is run, the method according to any one of claims 1 to 21 is implemented.
